# EUROPEAN PATENT APPLICATION

(11) **EP 4 807 570 A1**
(43) Date of publication of application: **16.09.2026**
(21) Application number: 26161532.2
(22) Date of filing: 02.03.2026
(51) Int. Cl.: G06F 13/16, G06F 3/06, G06F 13/40

(54) **SYSTEMS, METHODS, AND DEVICES FOR CONFIGURING MEMORY ACCESS SWITCH BASED ON THROUGHPUT**

(30) Priority: 13.03.2025 US 202563771612 P; 11.12.2025 US 202519417319
(71) Applicant: Samsung Electronics Co., Ltd., Suwon-si, Gyeonggi-do 16677 (KR)
(72) Inventor: PARK, Heekwon, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A method may include accessing, by at least one host, using a first memory access link between a switch and a first memory device, data at the first memory device, and transferring, based on a throughput of the first memory device, using a second memory access link between the switch and a second memory device, a portion of the data from the first memory device to the second memory device. The method may further include accessing, by the at least one host, using the second memory access link, the portion of the data at the second memory device. The method may further include selecting, based on the throughput of the first memory device, one of the at least one host to perform the transferring.

## Description

### TECHNICAL FIELD

This disclosure relates generally to memory systems, and more specifically to systems, methods, and devices for configuring a memory access switch based on throughput.

### BACKGROUND

Some memory systems may include a memory access switch that may selectively connect one or more hosts to one or more memory devices. A memory access switch may enable a host to access a pool of shared memory located across multiple memory devices.

The above information disclosed in this Background section is only for enhancement of understanding of the background of the inventive principles and therefore it may contain information that does not constitute prior art.

### SUMMARY

A method may include accessing, by at least one host, using a first memory access link between a switch and a first memory device, data at the first memory device, and transferring, based on a throughput of the first memory device, using a second memory access link between the switch and a second memory device, a portion of the data from the first memory device to the second memory device. The method may further include accessing, by the at least one host, using the second memory access link, the portion of the data at the second memory device. The method may further include selecting, based on the throughput of the first memory device, one of the at least one host to perform the transferring. The method may further include performing a first determination, using a first data structure, of a memory access status of one or more first memory accesses of the first memory device, changing, based on the first determination, an active state of the first data structure, performing a second determination, based on the active state of the first data structure, using a second data structure, of a memory access status of one or more second memory accesses of the first memory device, and selecting, based on the active state of the first data structure, using the second data structure, one of the at least one host to perform the transferring. The throughput of the first memory device may be a first throughput, a first one of the at least one host has a second throughput with the first memory device, a second one of the at least one host has a third throughput with the first memory device, and the method further comprises selecting, based on the second throughput and the third throughput, the first one of the at least one host to perform the transferring. The second throughput may be less than the third throughput. The method may further include selecting, based on the throughput of the first memory device and a throughput of the second memory device, the second memory device to perform the transferring. The method may further include attaching, based on the throughput of the first memory device and a throughput of the second memory device, using a third memory access link, a third memory device to the switch. The transferring may include performing a first transfer of a first part of the portion of the data from the first memory device to the second memory device, performing, based on the first transfer, a determination of a throughput of the second memory device, and performing, based on the determination, a second transfer of a second part of the portion of the data from the first memory device to the second memory device.

A method comprising may include performing a first accessing, by a host, using a first memory access link between the host and a switch, of data at a memory device connected to the switch, and performing a second accessing, by the host, based on a throughput of the first memory access link, using a second memory access link between the host and the switch, of at least a portion of the data at the memory device. The throughput of the first memory access link may be a first throughput, the memory device may be a first memory device, and the method may further include determining, based on a second throughput of a third memory access link between the switch and the memory device, and a third throughput of a fourth memory access link between the switch and a second memory device, the first throughput. The first accessing may be based on a first physical address of the at least a portion of the data at the memory device, and the second accessing may be based on a second physical address of the at least a portion of the data at the memory device. The method may further include changing, based on the throughput of the first memory access link, a physical address of the at least a portion of the data at the memory device. The second accessing may include changing a first physical address of a first part of the at least a portion of the data, determining, based on the changing the first physical address, a throughput of the second memory access link, and changing, based on the determining, a second physical address of a second part of the at least a portion of the data.

A method may include accessing, by a host, using a first one of two memory access links, data in at least one memory device, wherein the host may be connected to the at least one memory device by a switch and the two memory access links, and accessing, by the host, using a second one of the two memory access links, based on a throughput of the first one of the two memory access links, at least a portion of the data. The first one of the two memory access links may be connected to the switch and a first one of the at least one memory device, and the second one of the two memory access links may be connected to the switch and a second one of the at least one memory device. The method may further include transferring, based on the throughput of the first one of the two memory access links, the at least a portion of the data from the first one of the at least one memory device to the second one of the at least one memory device. The first one of the two memory access links may be connected to the host and the switch, and the second one of the two memory access links may be connected to the host and the switch. The data may be located in one of the at least one memory device, and the at least a portion of the data may be located in the one of the at least one memory device. The first one of the two memory access links may be associated with a first physical address for the at least a portion of the data, and the second one of the two memory access links may be associated with a second physical address for the at least a portion of the data.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1A illustrates an embodiment of a memory system including a host, a memory access switch, and a first memory device attached to the host and having a first throughput in accordance with example embodiments of the disclosure.
Fig. 1B illustrates the embodiment of the memory system illustrated in Fig. 1A in which a second memory device is attached to the host and has a second throughput in accordance with example embodiments of the disclosure.
Fig. 2 illustrates an embodiment of a memory system having one or more upstream ports that may become saturated and/or one or more downstream ports that may become saturated in accordance with example embodiments of the disclosure.
Fig. 3 illustrates an embodiment of a memory system that may implement data migration and/or throughput redistribution in accordance with example embodiments of the disclosure.
Fig. 4 illustrates an embodiment of a memory system that may assign one or more memory devices based on one or more throughputs of the one or more memory devices in accordance with example embodiments of the disclosure.
Fig. 5 illustrates an embodiment of a memory device having saturation detection and/or notification functionality in accordance with example embodiments of the disclosure.
Fig. 6A illustrates an embodiment of a memory system including a host, a memory access switch, and a first memory device attached to the host and having a first throughput in accordance with example embodiments of the disclosure.
Fig. 6B illustrates the embodiment of the memory system illustrated in Fig. 6A in which a second memory device is attached to the host and has a second throughput in accordance with example embodiments of the disclosure.
Fig. 6C illustrates the embodiment of the memory system illustrated in Fig. 6B in which data is migrated from the first memory device to the second memory device, and corresponding throughput is redistributed from the first memory device to the second memory device in accordance with example embodiments of the disclosure.
Fig. 7 illustrates an example embodiment of a method and apparatus for monitoring, detecting, and/or sending a notification of, a throughput saturation condition for a memory device, selecting a target host, and/or tracking page accesses in accordance with example embodiments of the disclosure.
Fig. 8 illustrates an embodiment of a method and apparatus for selecting a target memory device for data migration and/or throughput redistribution in accordance with example embodiments of the disclosure.
Fig. 9 illustrates an embodiment of a method and apparatus that may incrementally migrate data, and/or incrementally redistribute throughput, from a first logical device to a second logical device in accordance with example embodiments of the disclosure.
Figs. 10A through 10F illustrate an embodiment of a method and apparatus that may incrementally migrate data, and/or incrementally redistribute throughput, from a first memory device to a second memory device in accordance with example embodiments of the disclosure.
Fig. 11A illustrates an embodiment of a memory system having a host with two upstream ports in accordance with example embodiments of the disclosure.
Fig. 11B illustrates the embodiment of the memory system illustrated in Fig. 11A in which throughput is redistributed from a first upstream port to a second upstream port based on a saturation of the first upstream port in accordance with example embodiments of the disclosure.
Fig. 12 illustrates an embodiment of a memory access protocol stack in accordance with example embodiments of the disclosure.

### DETAILED DESCRIPTION

Some memory systems may include one or more memory access switches that may connect one or more hosts and/or one or more memory devices arranged as a pool of shared memory. One or more hosts may be connected to a memory access switch using one or more memory access links configured as part of one or more upstream ports. One or more memory devices may be connected to a memory access switch using one or more memory access links configured as part of one or more downstream ports.

In some operating conditions, a port may become saturated, which may refer to a condition in which the throughput of the port may reach a value (e.g., a maximum bandwidth of the port) beyond which the port may be able to provide little or no additional throughput. A saturated port may reduce the performance of a memory system, for example, by limiting the rate at which a memory device may transfer data, even if the memory device has additional memory capacity available.

Some aspects of the disclosure relate to techniques for redistributing throughput between ports of a memory access switch in a manner that may reduce or eliminate saturation of one or more ports. Depending on the implementation details, some aspects of the disclosure may be applied to upstream ports and/or downstream ports.

For example, in a memory system in which a first downstream port of a memory access switch may become saturated, at least a portion of the throughput of the first downstream port may be redistributed to a second downstream port. Depending on the implementation details, this may increase the overall (e.g., combined) throughput of the two downstream ports. In some embodiments, redistributing throughput from a first downstream port to a second downstream port may involve migrating (e.g., transferring) data from a first memory device connected to the first downstream port to a second memory device connected to the second downstream port.

As another example, in a memory system in which a first upstream port between a host and a memory access switch may become saturated, at least a portion of the throughput of the first upstream port may be redistributed to a second upstream port between the host and the memory access switch. Depending on the implementation details, this may increase the overall (e.g., combined) throughput of the two upstream ports. In some embodiments, at least a portion of the throughput of the first upstream port may be redistributed to the second upstream port without migrating data.

Some additional aspects of the disclosure relate to techniques for selecting a host from which throughput may be redistributed. For example, in some embodiments, a host having a relatively low throughput may be selected to redistribute throughput away from. Depending on the implementation details, this may reduce or eliminate performance degradation that may be caused by migrating relatively frequently accessed pages of memory associated with the redistributed throughput.

Some additional aspects of the disclosure relate to techniques for selecting a memory device to which throughput may be redistributed. For example, in some embodiments, one or more attached memory devices may be checked for available bandwidth. Based on a lack of memory devices with available bandwidth, an additional memory device and/or logical device may be attached to a memory access switch.

Some additional aspects of the disclosure relate to techniques for migrating data from a first memory device to a second memory device to redistribute throughput from the first memory device to the second memory device. For example, in some embodiments, data may be migrated in one or more batches (e.g., incrementally) which, depending on the implementation details, may cause one or more incremental redistributions of throughput. A throughput increase at the second memory device and/or a throughput decrease at the first memory device may be monitored to determine when enough data has been migrated to achieve a specified redistribution of throughput.

Some additional aspects of the disclosure relate to techniques for determining an access status (e.g., frequency) for one or more pages, logical devices, memory devices, and/or the like. For example, in some embodiments, a data structure such as a register may be used to track (e.g., count) logical device accesses at a memory device. In some embodiments, first and second bitmaps (or other data structures) may be used to track page accesses (e.g., to determine whether a page has been accessed during a current epoch). For example, a bit within a bitmap may indicate that a page has been accessed at least once, regardless of how many times the page has been accessed. In some embodiments, one or more bitmaps of page accesses may be reset, for example, once per epoch. In some embodiments, the first and second bit maps may toggle between an active mode (e.g., a writing mode in which the bitmap may be updated based on page accesses) and an inactive mode (e.g., a write-protected mode in which the bitmap may be read). Depending on the implementation details, this may ensure that a host may read a stable and/or unmodified snapshot of access information from an inactive bitmap for a previous epoch, while write activity may be directed to an active bitmap for the current epoch. In some embodiments, an epoch may be an amount of time that may have a default value (e.g., one second) and/or may be a parameter configured by a user, a host, and/or the like.

This disclosure encompasses numerous aspects relating to redistributing throughput between ports of a memory access switch. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

For purposes of illustration, some embodiments may be described in the context of some specific implementation details such as specific interfaces, protocols, and/or the like. However, the aspects of the disclosure are not limited to these or any other implementation details.

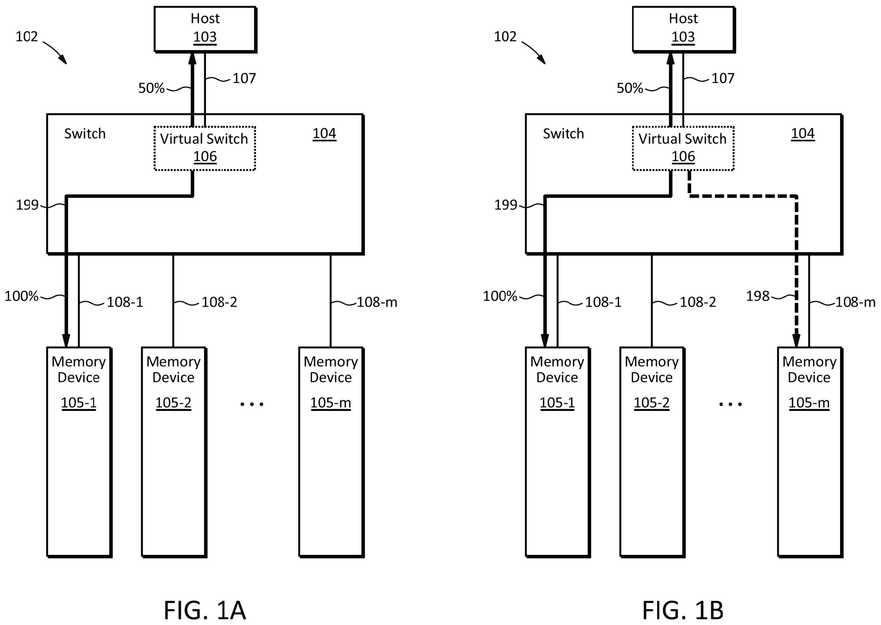

In some example embodiments described here, reference indicators having a base portion and a suffix portion may be referred to collectively and/or individually by the base portion. For example, the one or more memory devices 105-1, 105-2, ... 105-m illustrated in Fig. 1A may be referred to collectively and/or individually as 105.

Multiple figures having the same numbers with different letter suffixes may be referred to collectively and/or individually by the number. For example, Fig. 1A and Fig. 1B may be referred to collectively and/or individually as Fig. 1.

Fig. 1A illustrates an embodiment of a memory system including a host, a memory access switch, and a first memory device attached to the host and having a first throughput in accordance with example embodiments of the disclosure. Fig. 1B illustrates the embodiment of the memory system illustrated in Fig. 1A in which a second memory device is attached to the host and has a second throughput in accordance with example embodiments of the disclosure.

Referring to Fig. 1A, the memory system 102 may include a host 103, a memory access switch 104 (which may also be referred to as a switch, a memory switch, a protocol switch, a memory access protocol switch, a memory interface switch, and/or a memory access interface switch), and/or one or more memory devices 105-1, 105-2, ... 105-m (which may also be referred to as devices). Switch 104 may include at least one virtual switch (VS) 106 (which may also be referred to as a virtual memory access protocol switch and/or a virtual memory access interface switch). In some embodiments, a virtual switch 106 may include, and/or be referred to as, pooling logic.

In some embodiments, a virtual switch may include one or more bridges (e.g., one or more virtual bridges) that may bind one or more apparatus to the virtual switch and, therefore, to each other. For example, virtual switch 106 illustrated in Fig. 1A may include a virtual bridge that may be configurable (e.g., dynamically) to bind (e.g., attach) host 103 to virtual switch 106. In some embodiments, virtual switch 106 may also include m bridges (e.g., virtual bridges), that may be configurable (e.g., dynamically) to bind (e.g., attach) memory devices 105-1, ... 105-m, respectively, to virtual switch 106. In some embodiments, virtual switch 106 may include a memory decoding mechanism that may enable virtual switch 106 to route a memory access request from host 103 to one or more target memory devices 105.

Depending on the implementation details, a virtual switch may enable resources such as memory at one or more memory devices 105 to be partitioned and/or isolated between hosts 103 in a system 102 that may have more than one host 103. For example, at least one (e.g., each) host 103 may see a separate virtual switch 106 that may include one or more bridges for one or more corresponding memory devices 105 assigned to the host 103. Thus, in some embodiments, one or more virtual switches 106 may support multi-host connections and/or enable pooling of memory at one or more memory devices 105.

Host 103 may be connected to switch 104 and/or virtual switch 106 using a communication link 107. One or more memory devices 105-1, 105-2, ... 105-m may be connected to switch 104 and/or virtual switch 106 using one or more communication links 108-1, 108-2, ... 108-m.

Some or all of the memory capacity of one or more memory devices 105-1, 105-2, ... 105-m may be configured as a pool of shared memory that may be accessed by host 103 using switch 106. Memory within a memory device may be allocated in the form of a logical device (LD).

In the example illustrated in Fig. 1A, host 103 may be configured to use at least a portion of the memory capacity of memory device 105-1 which host 103 may access using a data path indicated by an arrow 199 between host 103 and memory device 105-1. A portion of data path 199 through communication link 107 may use 50 percent of the bandwidth of communication link 107 (e.g., 32GB/s of a 64GB/s link). A portion of the data path 199 through communication link 108-1 may use 100 percent of the bandwidth of communication link 108-1 (e.g., 32GB/s of a 32GB/s link). Thus, link 108-1 may be referred to as being saturated. (Additionally, or alternatively, memory device 105-1 may be referred to as being saturated, the throughput of link 108-1 may be referred to as being saturated, a downstream port of switch 104 and/or virtual switch 106 may be referred to as being saturated, and/or an upstream port of memory device 105-1 may be referred to as being saturated.)

In a saturated condition, link 108-1 be a throughput bottleneck that may limit the rate at which host 103 may access memory in memory device 105-1. For example, an application using higher throughput may not be able to obtain additional throughput due to the fixed bandwidth limitation of the saturated link 108-1. Thus, system 102 may not be able to deliver higher throughput, even when an application requests it, because the device and/or link throughput may already be operating at or near its maximum limit.

One technique that may potentially increase the performance of the memory system 102 illustrated in Fig. 1A may be to attach another memory device 105-m to host 103 as illustrated in Fig. 1B. This may enable host 103 to access memory capacity in memory device 105-m using an additional link 108-m which may potentially increase throughput. For example, if the memory system 102 is implemented at least partially with Compute Express Link (CXL) as described in more detail below, one or more memory devices 105 may be implemented as a Dynamic Capacity Device (DCD) which may enable memory capacity to be added or removed dynamically without a system reset.

Additionally, or alternatively, memory capacity located at multiple memory devices 105 may be interleaved to increase memory capacity and/or throughput. However, due to its dynamic nature, interleaving CXL memory devices may not be suitable for improving throughput for at least two reasons. First memory devices 105 bound for interleaving may not be attached and/or detached individually. Second, interleaving may compromise switch flexibility and/or impair its dynamic nature.

Moreover, merely adding additional memory capacity at memory device 105-m along with the associated bandwidth of link 108-m may not improve the access performance of data located at memory device 105-1 because link 108-m may not be used to access memory device 105-1. Thus, link 108-m may initially have zero percent throughput as shown by arrow 198 in Fig. 1B. Even though adding additional memory capacity at memory device 105-m may enable new data located at memory device 105-m to be accessed at a relatively higher throughput using link 108-m, it may not improve the throughput of accessing data located at memory device 105-1 if link 108-1 remains saturated.

One technique for improving the access performance of memory system 102 may be to migrate data from the memory device having the saturated link to a memory device having a non-saturated link as described below in accordance with example embodiments of the disclosure. Depending on the implementation details, migrating data from a memory device having a saturated link to a memory device having a non-saturated link may also result in throughput being redistributed from a saturated link to a non-saturated link. This may be referred to, and/or characterized as, balancing throughput between links, memory devices, hosts, and/or the like.

Memory access link 108-1 illustrated in Fig. 1 may be characterized as a downstream link (e.g., from the perspective of switch 104). Memory access link 107 may be characterized as an upstream link (e.g., from the perspective switch 104). In some embodiments, a memory access link may be associated with one or more memory access interfaces, bridges, stacks, and/or the like located at one or more ends of the link, for example, at host 103, switch 104, and/or a memory device 105 as described in more detail below. In some embodiments, a link and/or one or more associated interfaces, bridges, stacks, and/or the like may be referred to individually and/or collectively as a port. Thus, a link 108 illustrated in Fig. 1 may be referred to as a downstream port and/or as part of a downstream port. Similarly, link 107 illustrated in Fig. 1 may be referred to as an upstream port and/or as part of an upstream port. Thus, in some embodiments, links, ports, interfaces, bridges, stacks, and/or the like, may be referred to interchangeably unless otherwise apparent from context.

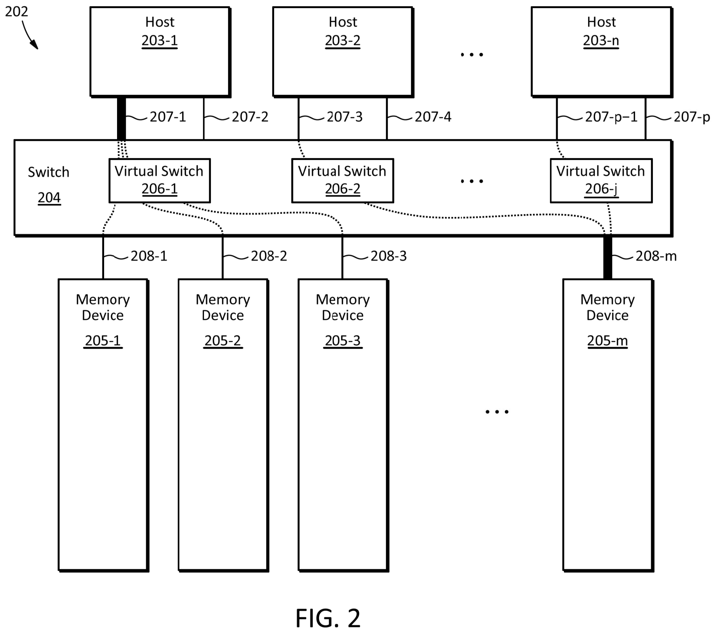

Fig. 2 illustrates an embodiment of a memory system having one or more upstream ports that may become saturated and/or one or more downstream ports that may become saturated in accordance with example embodiments of the disclosure. The memory system 202 may include one or more elements that may, in some aspects, be similar to the embodiments illustrated in Fig. 1 and/or other drawings in which similar elements may be indicated by reference numbers ending in, and/or containing, the same digits, letters, and/or the like. For example, memory system 202 may include one or more switches 204, one or more hosts 203-1, ... 203-n, connected to one or more switches 204 using one or more upstream ports 207-1, ... 207-p, one or more virtual switches 206-1, ... 206-j, and/or one or more memory devices 205-1, 205-2, ... 205-m connected to one or more switches 204 using one or more downstream ports 208-1, 208-2, ... 208-m.

Any of upstream ports 207-1, ... 207-p may become saturated, especially, for example, if the upstream port is used by a host 203 to access (e.g., simultaneously) multiple memory devices 205. Thus, upstream port 207-1, which may be attached to memory devices 205-1, 205-2, and/or 205-3 as shown by dotted lines may be saturated.

Any of downstream ports 208-1, ... 208-m may become saturated, especially, for example, if the downstream port is used by multiple hosts 203 to access (e.g., simultaneously) a corresponding memory device 205. Thus, downstream port 208-m, which may be attached to hosts 203-2 and/or 203-n as shown by dotted lines may be saturated.

Any aspects of the disclosure relating to redistributing throughput from one or more first ports to one or more second ports (e.g., balancing throughput between ports) may be applied to upstream and/or downstream ports.

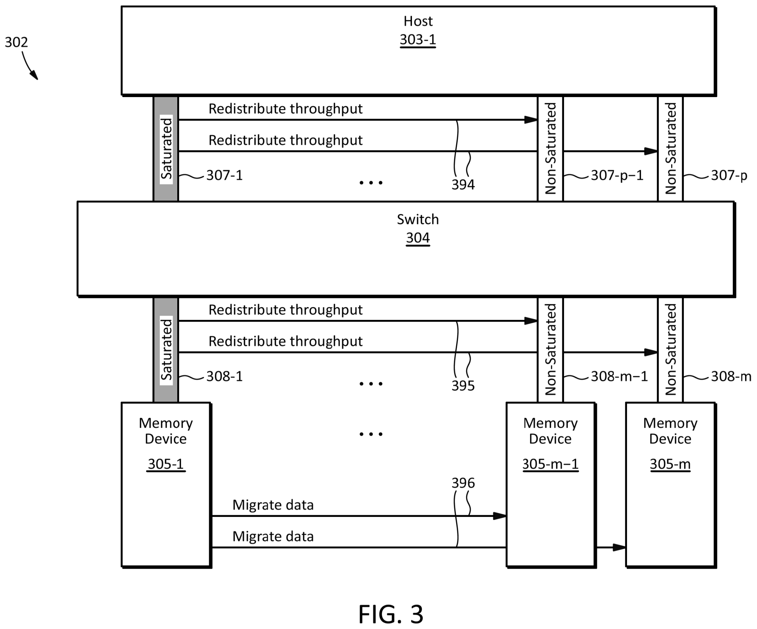

Fig. 3 illustrates an embodiment of a memory system that may implement data migration and/or throughput redistribution in accordance with example embodiments of the disclosure. The memory system 302 may include one or more elements that may, in some aspects, be similar to the embodiments illustrated in Fig. 1, Fig. 2, and/or other drawings in which similar elements may be indicated by reference numbers ending in, and/or containing, the same digits, letters, and/or the like.

However, memory system 302 may include one or more control circuits located at one or more hosts 303, one or more switches 304, one or more memory devices 305, and/or at any other location that may implement logic to redistribute throughput between ports. For example, throughput from saturated upstream port 307-1 may be redistributed to one or more non-saturated ports 307-p-1, 307-p, and/or the like, as shown by arrows 394

As another example, throughput from saturated downstream port 308-1 may be redistributed to one or more non-saturated downstream ports 308-m-1, 308-m, and/or the like, as shown by arrows 395. In some embodiments, throughput may be redistributed between downstream ports 308 by migrating data between memory devices 305 as shown by arrows 396. For example, migrating data from memory device 305-1 to memory device 305-m may also redistribute throughput from port 308-1 to port 308-m. Data may be migrated between memory devices 305-1 through 305-m, for example, using corresponding downstream ports 308-1 through 308-m, respectively, or any other communication channels.

In some embodiments, throughput may be redistributed to one or more ports that may be saturated. For example, even if downstream port 308-m may be saturated, redistributing at least a portion of throughput from port 308-1 to port 308-m may still improve overall system performance, depending on the implementation details, because the throughput redistributed to port 308-m may be for data having a different access pattern, because the redistributed throughput may have a different (e.g., higher) priority, and/or the like.

In some embodiments, throughput that may be redistributed between ports may also be referred to as being redistributed between associated hosts, memory devices, switches, and/or the like. For example, throughput that may be redistributed from port 308-1 to port 308-m as described above may also be referred to as being redistributed from memory device 305-1 to memory device 305-m. In some embodiments, throughput that may be redistributed may also be referred to as being redirected, transferred, dispersed, migrated, and/or the like.

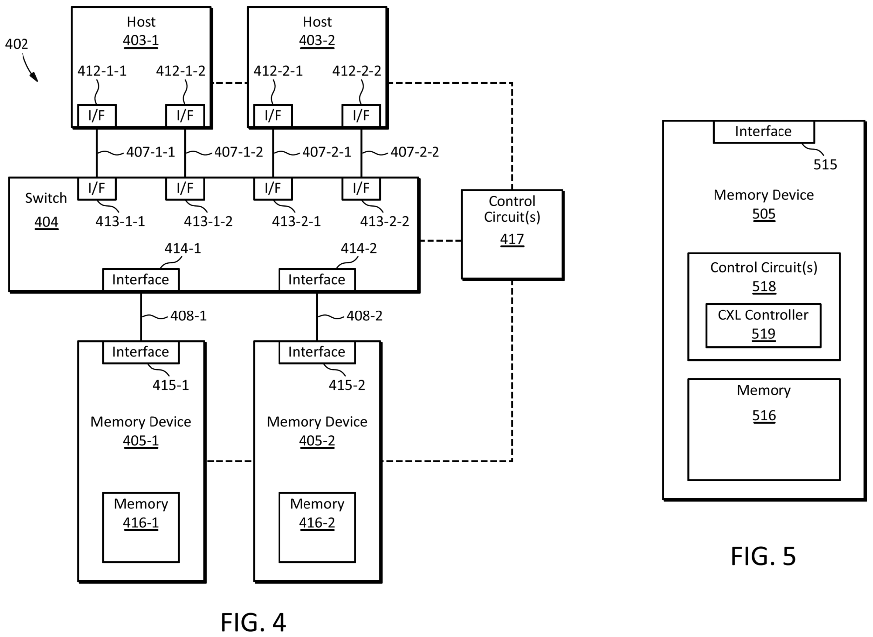

Fig. 4 illustrates an embodiment of a memory system that may assign one or more memory devices based on one or more throughputs of the one or more memory devices in accordance with example embodiments of the disclosure. The memory system 402 may be implemented with, and/or be used to implement, any of the memory systems disclosed herein, including those illustrated with respect to Fig. 1, Fig. 2, Fig. 3, and/or any other drawings. Memory system 402 may include one or more elements that may, in some aspects, be similar to the embodiments illustrated in other figures in which similar elements may be indicated by reference numbers ending in, and/or containing, the same digits, letters, and/or the like.

For purposes of illustrating aspects of the disclosure, memory system 402 may be illustrated with one or more hosts 403-1 and/or 403-2, a switch 404, and/or memory devices 405-1 and/or 405-2, but any numbers of hosts 403, switches 404, and/or memory devices 405 may be included in various embodiments.

Host 403-1 may include memory access interfaces 412-1-1 and/or 412-1-2 that may communicate with memory access interfaces 413-1-1 and/or 413-1-2, respectively in switch 404 through communication links 407-1-1 and/or 407-1-2, respectively, using one or more memory access protocols. Host 403-2 may include memory access interfaces 412-2-1 and/or 412-2-2 that may communicate with a memory access interfaces 413-2-1 and/or 413-2-2, respectively in switch 404 through communication links 407-2-1 and/or 407-2-2, respectively, using one or more memory access protocols.

Switch 404 may include memory access interfaces 414-1 and/or 414-2 that may communicate with a memory access interfaces 415-1 and/or 415-2 in memory devices 405-1 and/or 405-2, respectively, through communication links 408-1 and/or 408-2, respectively, using one or more memory access protocols.

Some or all of interfaces 412, interfaces 413, and/or communication links 407 may be referred to and/or characterized as upstream ports, for example, from the perspective of switch 404. Some or all of interfaces 414-1 and/or 414-2, corresponding interfaces 415-1 and/or 415-2, and/or corresponding communication links 408-1 and/or 408-2 may be referred to and/or characterized as downstream, for example, from the perspective of switch 404.

Memory system 402 may also include one or more control circuits 417 that may control some or all of the functionality (e.g., logic) relating to detecting saturated ports, selecting one or more target hosts and/or memory devices from which to redistribute throughput, migrate data, and/or the like, based on throughput status, memory utilization, and/or the like, of one or more hosts and/or memory devices in accordance with example embodiments of the disclosure. For example, the one or more control circuits 417 may perform any number of the following functions: monitoring throughputs of one or more memory devices 405 and/or associated ports; monitoring throughputs of one or more hosts 403 and/or associated ports; detect saturation conditions of one or more hosts 403, memory devices 405 and/or associated ports; sending a notification of a saturation condition to one or more hosts 403 and/or one or more other components of memory system 402; selecting one or more hosts 403 from which to redistribute throughput, migrate data, and/or the like; selecting one or more memory devices 405 to assign to one or more hosts 403; attaching one or more memory devices 405 to one or more hosts 403; allocating memory in one or more memory devices 405 to one or more hosts 403; redistributing throughput between hosts 403, redistribute throughput and/or migrating data between memory devices 405, and/or the like.

The one or more control circuits 417 may be implemented partially or entirely in any component or combination of components in memory system 402. For example, in some embodiments, the one or more control circuits 417 may be implemented in a separate component as illustrated in Fig. 4. In other embodiments, some of the functionality (e.g., logic) of the one or more control circuits 417 may be implemented, at least partially, at one or more other components. For example, in some embodiments, functionality to monitor throughput, detect saturation, send notifications of saturation, and/or the like may be located in one or more hosts 403, one or more memory devices 405; functionality to request assignment of a memory device 405 and/or allocate memory in a memory device 405 may be located at one or more hosts 403; functionality to incremental migrate data between memory devices 405 may be located at one or more hosts 403; and/or functionality to assign a memory device 405 and/or request attachment of a memory device 405 may be located at a fabric manager which may be located, for example, at a switch 404, one or more hosts 403, a separate component, and/or the like.

In some embodiments, some or all of the functionality (e.g., logic) of the one or more control circuits 417 may be implemented in, integrated with, coordinated with, and/or the like, other functionality in one or more other components of memory system 402. For example, although memory system 402 is not limited to any specific implementation details, in some embodiments, switch 404, one or more of memory devices 405, one or more of memory access interfaces 412, 413, 414, and/or 415 and/or communication links 407 and/or 408 may be implemented using Compute Express Link (CXL) components, interconnects, interfaces, protocols, and/or the like.

In embodiments implemented at least partially with CXL, the one or more control circuits 417 may be implemented in, integrated with, coordinated with, and/or the like, any number of the following: a performance monitoring circuit (e.g., a CXL Performance Monitoring Unit (CPMU)) which may be located at least partially at one or more hosts 403; a fabric manager which may be located at least partially at one or more hosts 403, a switch 404, and/or the like; a Component Command Interface (CCI) which may be implemented, for example, as mailbox CCI and/or Management Component Transport Protocol (MCTP) based CCI; a CXL controller which may be located, for example, in any component that communicates using CXL; and/or the like.

In embodiments implemented at least partially with CXL, one or more of memory devices 405 may be implemented with a CXL memory module (CMM) such as a CMM-D in which memory 416 may include primarily volatile memory such as dynamic random access memory (DRAM), a CMM-H in which memory 416 may include a hybrid configuration of volatile memory such as DRAM and nonvolatile memory such as flash memory, and/or the like. Additionally, or alternatively, in embodiments implemented at least partially with CXL, switch 404 may be implemented with a CXL switch, one or more virtual switches within switch 404 may be implemented with virtual CXL switches (VCSs), and/or one or more bridges may be implemented with PCI-to-PCI bridges (PPBs).

Additionally, or alternatively, in embodiments implemented at least partially with CXL, one or more of memory access interfaces 412, 413, 414, and/or 415 and/or communication links 407 and/or 408 may be implemented with one or more CXL protocol stacks which may include one or more electrical and/or logical physical (PHY) layers that may implement one or more serial links, one or more CXL dynamic and/or static multiplexer (MUX) circuits, one or more link layers, and/or one or more transaction layers, any or all of which may implement one or more multiplexed (e.g., dynamically multiplexed) protocols such as CXL.io, CXL.cache, and/or CXL.mem. In some embodiments, one or more protocols such as CXL.cache, and/or CXL.mem may provide memory coherency.

Other examples of memory access interfaces, interconnects, protocols, and/or the like, that may be used to implement any of the functionally disclosed herein may include Peripheral Component Interconnect Express (PCle), Nonvolatile Memory Express (NVMe), NVMe over Fabric (NVMe-oF), Gen-Z, Open Coherent Accelerator Processor Interface (OpenCAPI), Cache Coherent Interconnect for Accelerators (CCIX), Direct Memory Access (DMA), Remote DMA (RDMA), RDMA over Converged Ethernet (ROCE), and/or the like.

A host 403 may be implemented with any component or combination of components that may utilize one or more of memory devices 405 and/or memory therein which may be arranged, for example, as one or more pools of shared memory (e.g., implemented as logical devices). For example, a host may be implemented with one or more of a server, a storage node, a compute node, a central processing unit (CPU), a graphics processing unit (GPU), a data processing unit (DPU), a neural processing unit (NPU), a tensor processing unit (TPU), a workstation, a personal computer, a tablet computer, a smartphone, and/or the like, or multiples and/or combinations thereof.

A switch 404 may be implemented with any component or combination of components having any form factor such as an integrated circuit (IC) chip (e.g., a packaged semiconductor die), a semiconductor die, a multi-chip module, a multi-die module, a circuit board, an add-in card, a backplane, a midplane, or multiples and/or combinations thereof.

A memory device 405 may be implemented with any component or combination of components such as a CMM, a CXL solid state drive (SSD), a single inline memory module (SIMM), a dual inline memory module (DIMM), and/or the like, any of which may have any form factor such as a 3.5 inch, 2.5 inch, 1.8 inch, and/or the like, storage device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor Next-generation Small Form Factor (NGSFF), NF1 form factor, and/or the like, or a combination thereof. Any memory device 405 disclosed herein may be connected to a system using one or more connectors such as Serial ATA (SATA), Small Computer Systems Interface (SCSI), Serial Attached SCSI (SAS), and/or M.2 connectors, EDSFF connectors (e.g., 1C, 2C, 4C, 4C+, and/or the like), U.2 connectors (which may also be referred to as SSD form factor (SSF) SFF-8639 connectors), U.3 connectors, PCIe connectors (e.g., card edge connectors), SIMM connectors, DIMM connectors, and/or the like.

Fig. 5 illustrates an embodiment of a memory device having saturation detection and/or notification functionality in accordance with example embodiments of the disclosure. The memory device 505 may be implemented with, or be used to implement, any of the memory devices, memory systems, and/or the like, disclosed herein. Memory device 505 may include one or more elements that may, in some aspects, be similar to the embodiments illustrated in other figures, for example, memory device 405 illustrated in Fig. 4 in which similar elements may be indicated by reference numbers ending in, and/or containing, the same digits, letters, and/or the like.

Referring to Fig. 5, memory device 505 may include a memory access interface 515, memory 516, and/or one or more control circuits 518. Memory 516 may be implemented, for example, with volatile memory such as DRAM, nonvolatile memory such as flash memory (e.g., not-AND (NAND) FLASH), and/or the like, or a combination thereof. Memory interface 515 may be implemented, for example, one or more communication stacks such as one or more CXL protocol stacks as described herein. The one or more control circuits 518 may be implemented at least partially, for example, with a device controller. In some embodiments, the one or more control circuits 518 may include a protocol controller such as a CXL controller 519, an NVMe controller, and/or the like. In an embodiment in which memory 516 may be implemented at least partially with nonvolatile memory such as flash memory, the one or more control circuits 518 may include a media translation layer such as a flash translation layer (FTL).

The one or more control circuits 518 may implement any functionality related to a memory device 505 disclosed herein. For example, the one or more control circuits 518 may implement a performance monitor to track throughput of memory device 505 and/or memory access interface 515, for example, on a per-logical-device basis. As another example, the one or more control circuits 518 may implement a saturation detector to determine when the throughput of memory device 505 and/or memory access interface 515 reaches a threshold (e.g., percentage of maximum bandwidth such as 100 percent or a lower percentage at which a memory device 505 may be effectively saturated because it may not be able to support enough additional throughput to efficiently access another logical device or other unit of memory). As further examples, the one or more control circuits 518 may implement functionality to: send notifications (e.g., to one or more hosts) of a saturation condition; receive and/or execute a request (e.g., from a fabric manager) to attach the memory device 505 and/or a logical device therein, to a host; receive and/or execute a request (e.g., from a host) to allocate a portion of memory 516 (e.g., one or more logical devices) to a host; and/or the like.

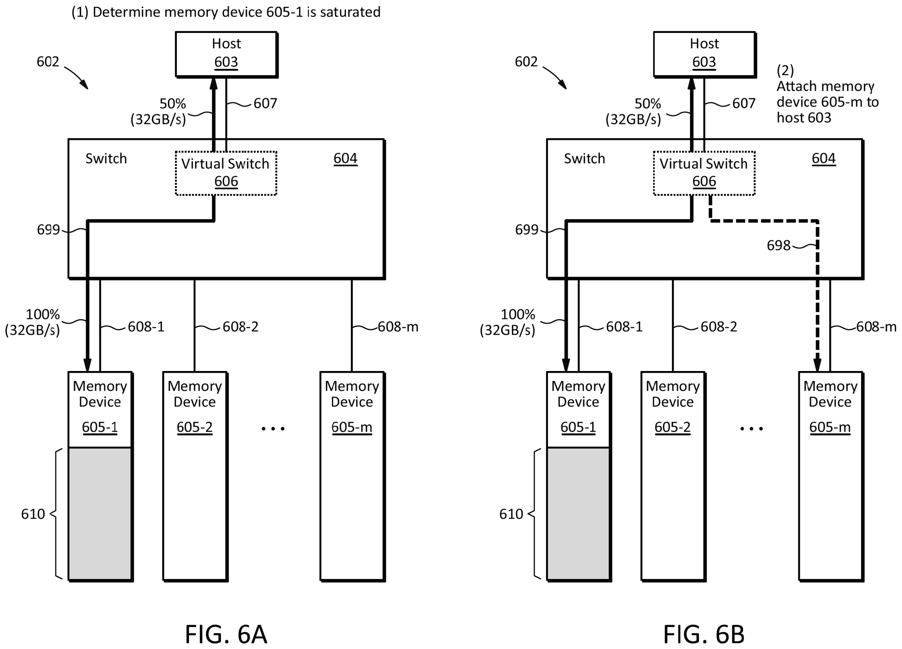

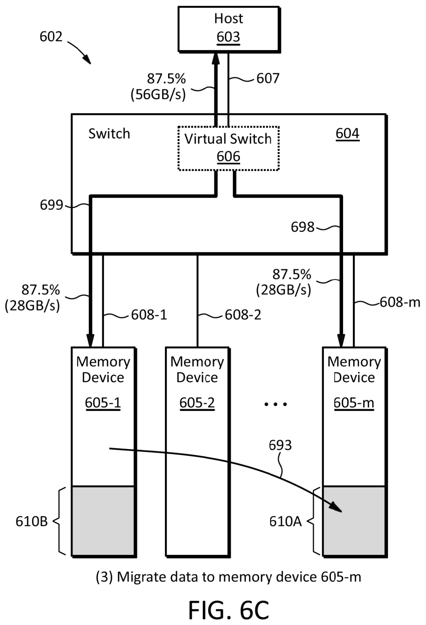

Fig. 6A illustrates an embodiment of a memory system including a host, a memory access switch, and a first memory device attached to the host and having a first throughput in accordance with example embodiments of the disclosure. Fig. 6B illustrates the embodiment of the memory system illustrated in Fig. 6A in which a second memory device is attached to the host and has a second throughput in accordance with example embodiments of the disclosure. Fig. 6C illustrates the embodiment of the memory system illustrated in Fig. 6B in which data is migrated from the first memory device to the second memory device, and corresponding throughput is redistributed from the first memory device to the second memory device in accordance with example embodiments of the disclosure. The memory system 602 illustrated in Fig. 6 may include one or more elements that may, in some aspects, be similar to the embodiments illustrated in Fig. 1 , Fig. 2, Fig. 3, and/or other drawings in which similar elements may be indicated by reference numbers ending in, and/or containing, the same digits, letters, and/or the like.

Referring to Fig. 6A, host 603 may be configured to use a portion 610 (e.g., 60 percent) of the capacity of memory device 605-1 which host 603 may access using a data path indicated by an arrow 699 between host 603 and memory device 605-1. A part of the data path 699 through port 608-1 may use 100 percent of the bandwidth of port 608-1 (e.g., 32GB/s of a 32GB/s link), and thus, port 608-1 may be saturated.

At operation (1) memory system 602 may determine that port 608-1 is saturated. The determination at operation (1) may be performed, for example, by at least a portion of one or more control circuits 417 illustrated in Fig. 4 that may be located at memory device 605-1, at switch 604, at host 603, and/or at any other component or combination thereof. In some embodiments, the determination that switch 608-1 is saturated may be performed at memory device 605-1 using one or more performance monitors, saturation detectors, and/or the like as described in more detail below.

Referring to Fig. 6B, at operation (2), based on the determination at operation (1) that port 608-1 is saturated, memory system 602 may attach a second memory device 605-m to host 603 using port 608-m so that host 603 may access memory device 605-m using data path 698. The attaching at operation (2) may be performed, for example, by at least a portion of one or more control circuits 417 illustrated in Fig. 4 that may be located at host 603, memory device 605-m, switch 604, and/or one or more other components. For example, in some embodiments, host 603 may send a request to a fabric manager (which may be implemented at a host 603, switch 604, and/or the like) to assign a memory device 605 to host 603. The fabric manager may select memory device 605-m a request to attached to host 603, and memory device 605 may respond to the request from the fabric manager by attaching to host 603.

Port 608-m may initially have zero percent throughput because memory device 605-m may not contain any data associated with host 603. Thus, the throughput of port 607 may remain at 50 percent of capacity (e.g., 32GB/s of a 64GB/s link).

Referring to Fig. 6C, at operation (3) memory system 602 may migrate a portion 610A of data (e.g., 30 percent of the capacity of memory device 605-1) from memory device 605-1 to memory device 605-m as illustrated by arrow 693. A migration at operation (3) may be performed (e.g., controlled) by at least a portion of one or more control circuits 417 illustrated in Fig. 4 located at host 603 and/or in any other location. In some embodiments, portion 610A may include relatively hot (e.g., frequently accessed) data. Host 603 may begin accessing migrated data 610A using port 608-m, and thus, the throughput of port 608-m may increase. Depending on the implementation details, migrating relatively hot data may ensure that a relatively large amount of throughput is also redistributed from port 608-1 to port 608-m.

In the example illustrated in Fig. 6C, the throughput of port 608-1 may decrease to 87.5 percent of maximum bandwidth (e.g., 28GB/s of a 32GB/s link), and the throughput of port 608-m may increase to 87.5 percent of maximum bandwidth (e.g., 28GB/s of a 32GB/s link). Thus, the throughput of port 607 may increase to 87.5 percent of maximum bandwidth (e.g., 56GB/s of a 64GB/s link), and host 603 may access the same amount of memory (data 610B representing 30 percent of the capacity remaining at memory device 605-1 plus data 610A representing 30 percent of the capacity migrated to memory device 605-1) at a throughput of 56GB/s compared to 32GB/s before the migration. Therefore, migrating data from a saturated memory device to a non-saturated memory device may improve the overall memory access performance of memory system 602.

Referring back to Fig. 6A, at operation (1), in some embodiments, memory system 602 may also determine whether upstream port 607 is saturated. The determination of saturation at operation (1) may be performed, for example, by at least a portion of one or more control circuits 417 illustrated in Fig. 4 that may be located at memory device 605-1 and/or at any other location. Depending on the implementation details, if upstream port 607 is saturated, migrating data away from memory device 605-1 and/or redistributing throughput away from saturated downstream port 608-1 may not improve overall throughput performance because upstream port 607 may not be able to accommodate additional throughput from downstream port 608-m, and thus, operations (2) and/or (3) may be omitted.

In some embodiments, migrating data between memory devices may involve selecting which portion(s) of data (e.g., which pages) to migrate. Some techniques for selecting target pages to migrate may involve hardware-based approaches that may count memory accesses (e.g., on a per-page basis). For example, in embodiments implemented at least partially with CXL, a CXL Hot-page Monitoring Unit (CHMU), which may be located at one or more memory devices and/or other locations, may count accesses of one or more pages (e.g., each page) and add the most frequently accessed pages to a list. Although a hardware approach based on counting individual page accesses may produce acceptable results in some situations, some implementations may be limited by hardware resources, potential overhead from tracking all pages, and/or the like.

Some additional techniques for selecting target pages to migrate may involve software-based approaches that may, for example, check one or more access bits of one or more page table entries (PTEs). Depending on the implementation details, however, this type of approach may provide relatively slow performance due to software-based tracking techniques and/or potential accuracies caused by infrequent updates.

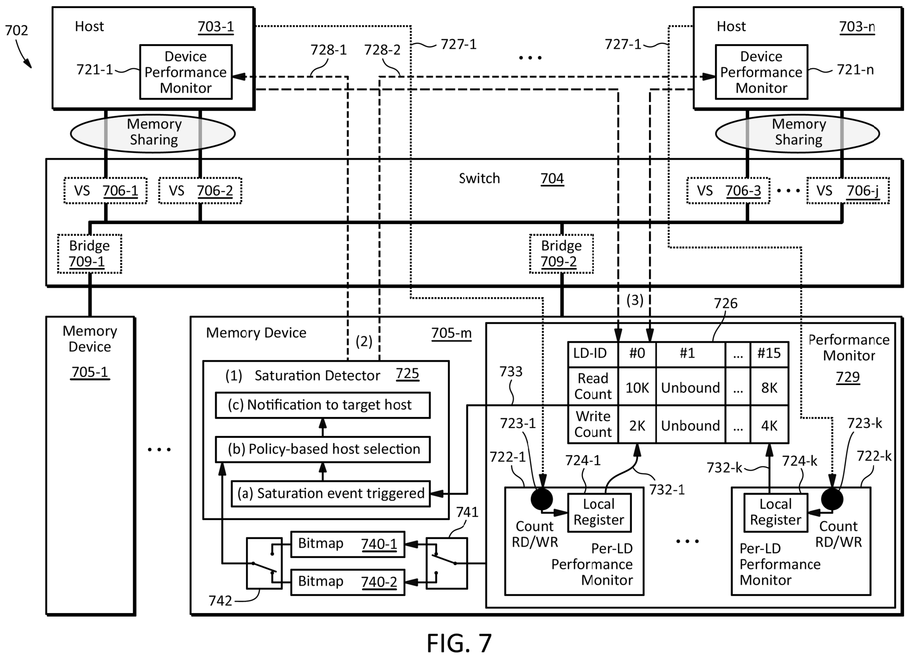

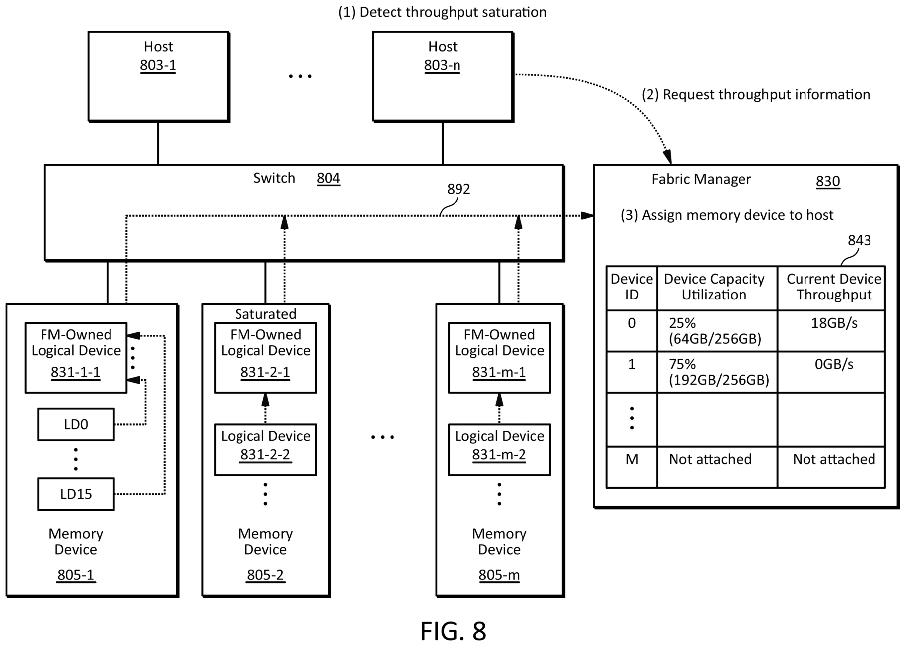

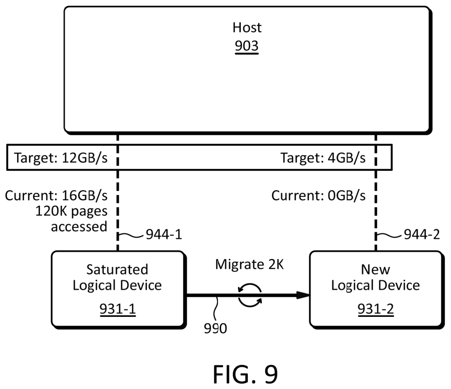

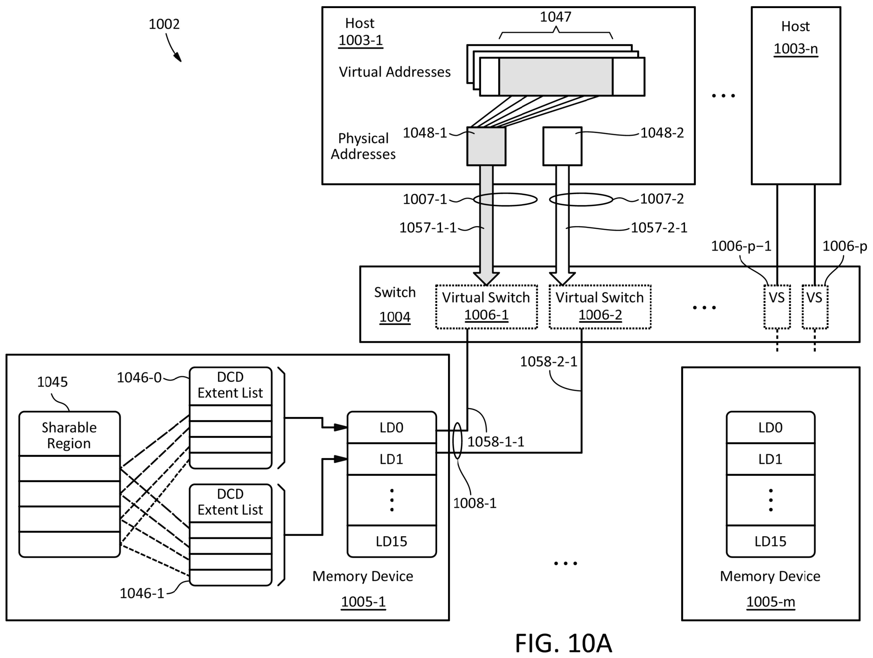

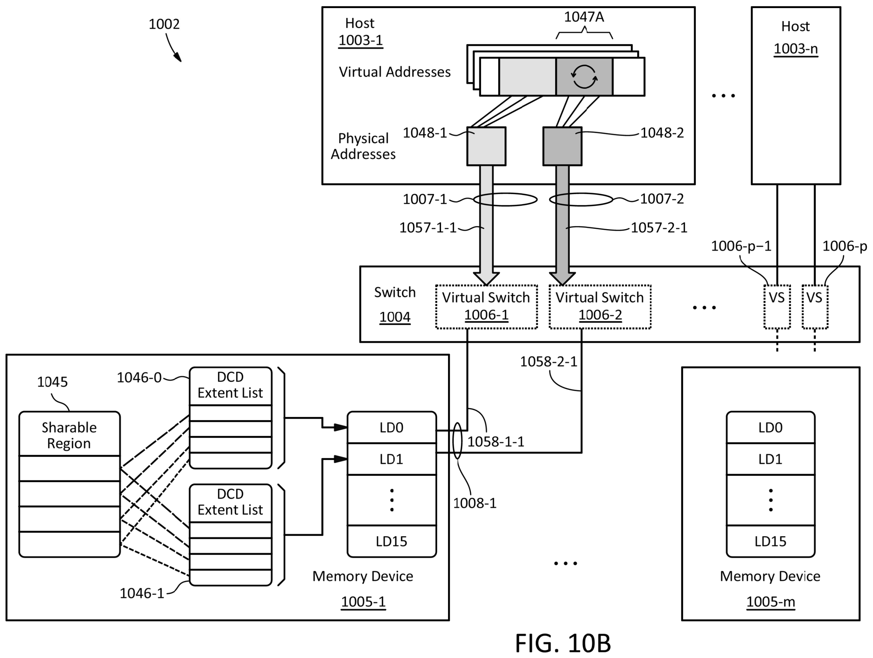

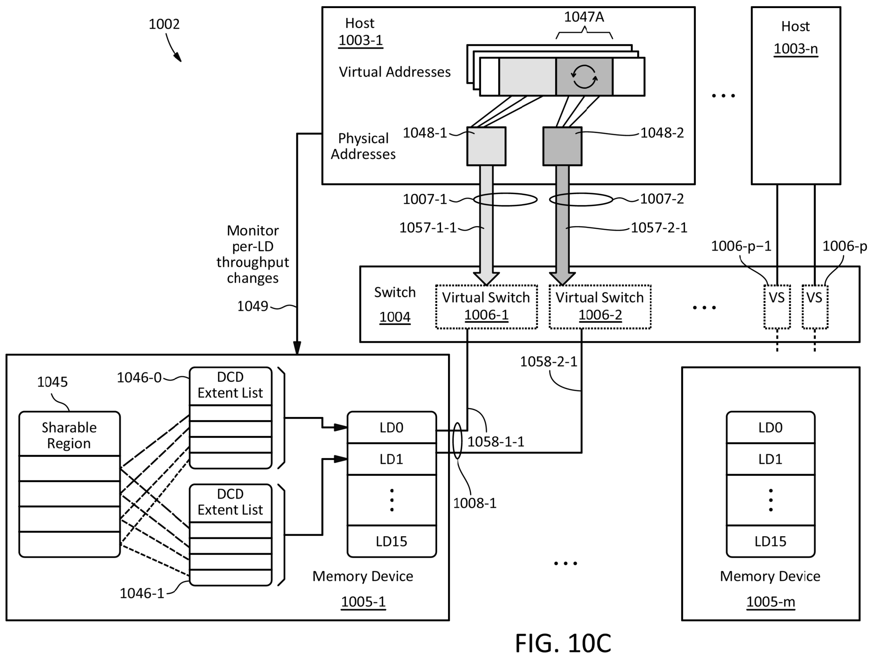

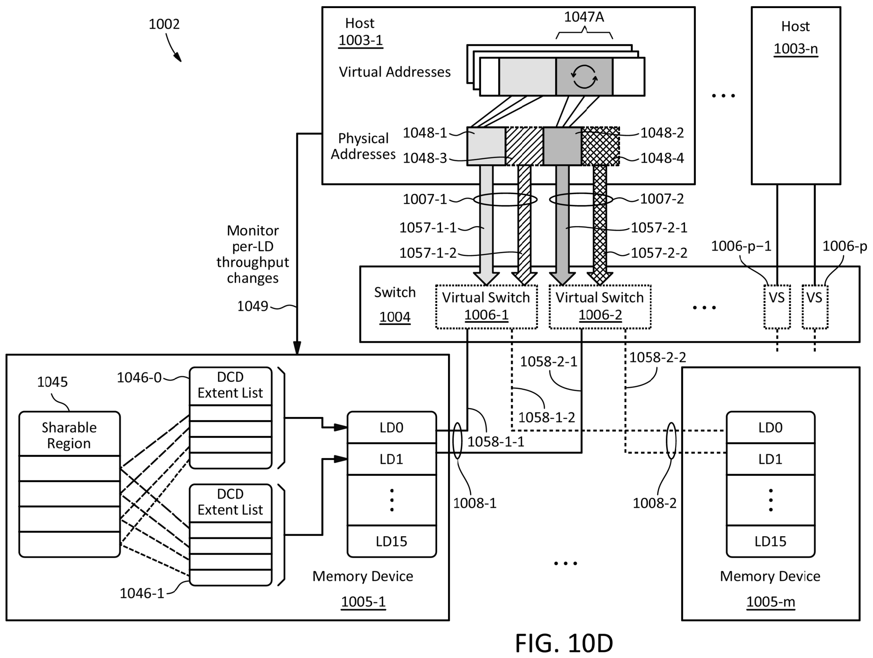

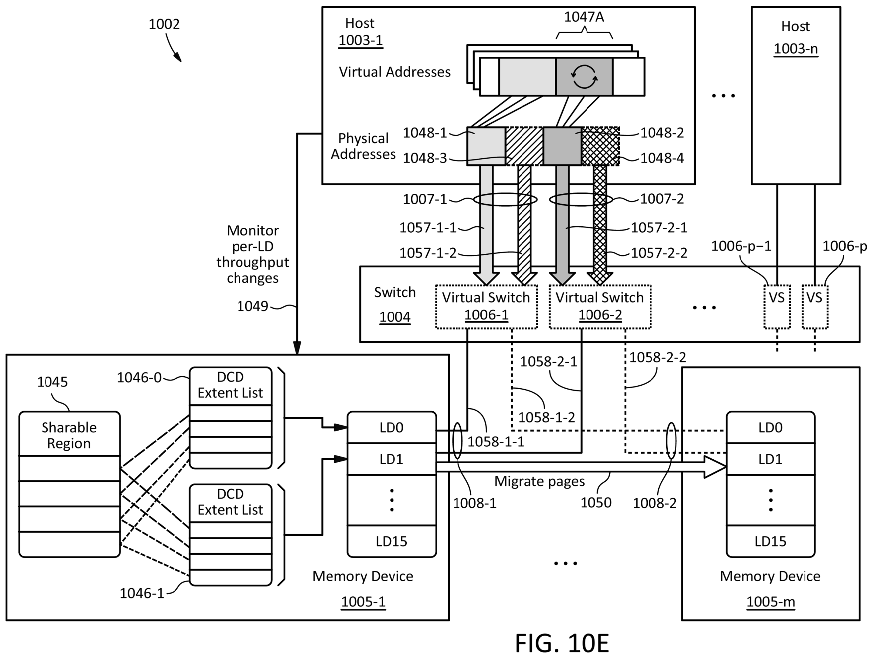

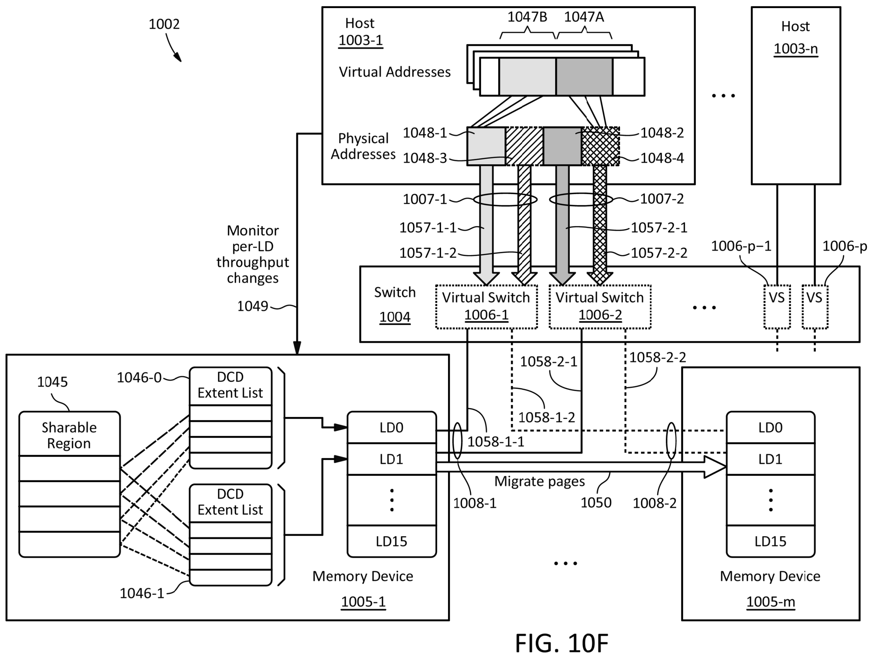

Some embodiments in accordance with the disclosure may implement one or more techniques for selecting data to migrate that may involve tracking page access status on a per-LD basis as illustrated and explained with respect to Fig. 7. In some embodiments in which multiple hosts may access a saturated memory device, a target host for data migration may selected based on a per-page throughput of one or more hosts (e.g., a lowest throughput host may be selected as a target host) as illustrated and explained with respect to Fig. 7. In some embodiments, a target host may identify a suitable attached memory device (or request assignment of another memory device) to which data may be migrated as illustrated and explained with respect to Fig. 8. In some embodiments, data may be migrated using an incremental migration technique to migrate enough data until a target throughput redistribution is achieved as illustrated and explained with respect to Fig. 9 and/or Fig. 10.

Fig. 7 illustrates an example embodiment of a method and apparatus for monitoring, detecting, and/or sending a notification of, a throughput saturation condition for a memory device, selecting a target host, and/or tracking page accesses in accordance with example embodiments of the disclosure. The embodiment illustrated in Fig. 7 may be implemented with, or be used to implement, any of the memory devices, memory systems, and/or operations and/or methods disclosed herein.

In the embodiment illustrated in Fig. 7, memory system 702 may include one or more elements that may, in some aspects, be similar to the embodiments illustrated in other figures in which similar elements may be indicated by reference numbers ending in, and/or containing, the same digits, letters, and/or the like. For example, memory system 702 may include one or more hosts 703-1, ... 703-n, one or more switches 704 having one or more virtual switches 706-1, ... 706-j, one or more bridges 709, and/or one or more memory devices 705-1, ... 705-m.

One or more switches 704 may also include one or more interconnect bridges 709-1, 709-2, ... 709-m that may connect one or more interfaces, controllers, and/or the like, for communication links to one or more memory devices 705. For purposes of illustration, in the embodiment illustrated in Fig. 7, one or more of switch 704, virtual switches 706, memory devices 705, bridges 709, and/or the like, may be described and implemented with CXL components, interconnects, interfaces, protocols, and/or the like. For example, switch 704 may be implemented with one or more CXL switches, one or more of virtual switches 706 may be implemented with VCSs, one or more bridges 709 may be implemented with one or more PPBs, and/or one or more of memory devices 705 may be implemented with CMMs. In other embodiments, however, other memory access components, interconnects, interfaces, protocols, and/or the like, may be used.

In the example embodiment illustrated in Fig. 7, hosts 703-1 and/or 703-n may share memory capacity in memory device 705-m and/or other devices. Host 703-1 may be connected to shared memory in one or more memory devices 705 through multiple corresponding virtual switches 706-1-1 and/or 706-1-2, respectively. Host 703-1 may be connected to shared memory in one or more memory devices 705 through corresponding virtual switches 706-2-1 and/or 706-2-2, respectively. Hosts 703-1 and/or 703-n may send read requests and/or write requests to memory device 705-m using, for example, a memory protocol such as CXL.mem as indicated by arrows 727.

A memory device 705 may include performance monitor 729 that may include one or more per-LD performance monitors 722-1, ... 722-k that may monitor memory throughput, for example, on a per logical device basis. Thus, in some embodiments, a number k of performance monitors may be equal to a number of logical devices supported by memory device 705. In some embodiments, a performance monitor 729 may monitor throughput, for example, by maintaining a count of read requests and/or a count of write requests for an associated logical device. The counts of read requests and/or write requests may be updated (e.g., reset), for example, once per epoch. In some embodiments, an epoch may be an amount of time that may have a default value (e.g., one second) and/or may be a parameter configured by a user, a host, and/or the like. A performance monitor 729 may include a counter 723 and/or a local register 724. Counter 723 may maintain a count of read requests and/or a count of write requests for an associated logical device, and local register 724 may store a count of read requests and/or a count of write requests, for example, for a current epoch.

A memory device 705 may also include a saturation detector 725 and/or a count register 726 which may be located in performance monitor 729. Count register 726 may maintain a count of read requests and/or a count of write requests for one or more logical devices (e.g., each logical device) configured in memory device 705. In the example illustrated in Fig. 7, memory device 705 may support up to 16 logical devices, and thus, count register 726 (which may be implemented as a dedicated register for memory device 705-m) may include entries for a read count and a write count for 16 logical devices (k=16), each of which may be identified by a logical device identifier (LD-ID) #0 through #15. Count register 726 may be configured, for example, with a parameter by one or more hosts 703 to enable signaling upon detection of throughput saturation.

In some embodiments, one or more entries for each logical device may be updated, for example, at each epoch (e.g., at the end of each epoch) by transferring counts of accumulated read requests and/or write requests from local registers 724 to corresponding entries in count register 726 as shown by arrows 732. In some embodiments, tracking counts of read requests and/or write requests on a per epoch basis may be referred to, and/or characterized as, epoch-based atomic throughput tracking.

At operation (1), saturation detector 725 may perform a process to detect a saturation condition at memory device 705-m, select one or more hosts 703 to migrate data between memory devices 705, send a notification to one or more selected hosts 703, and/or perform one or more additional operations as described in more detail below with respect to operations (a) through (c).

In some embodiments, saturation detector 725 may determine an overall throughput for memory device 705-m based on a combination of entries in count register 726. For example, in some embodiments, saturation detector 725 may determine an overall throughput for memory device 705-m by summing the counts of read and/or write requests as shown by arrow 733 for some or all of the logical devices in count register 726 which may contain the accumulated request counts for one full epoch.

At operation (a), saturation detector 725 may detect a saturation condition for memory device 705-m, for example, when the sum of counts of read and/or write requests for some or all of the logical devices exceeds a threshold value that may have a default value and/or may be configured as a parameter by a user, a host, and/or the like. In some embodiments, saturation detector 725 may check the count register 726 periodically such as once per epoch and/or at any other time interval.

At operation (b), saturation detector 725 may, based on detecting a saturation condition for memory device 705-m at operation (a), select a host 703 to migrate data between memory devices 705 attached to the selected host 703. Any policy may used to select a host 703 such as random selection, round robin, selecting a host 703 with the maximum total throughput to one or more memory devices 705, selecting a host 703 with highest priority, selecting a host 703 with lowest priority, selecting a host with at least one non-saturated upstream port, and/or the like. In some embodiments, saturation detector 725 may select more than one host 703.

However, depending on the implementation details, migrating relatively hot (e.g., frequently accessed) pages may degrade memory access performance, for example, for one or more hosts, applications, and/or the like. Thus, in some host selection policies in accordance with example embodiments of the disclosure, a host with a relatively low (e.g., the lowest) throughput (e.g., on a per-page basis) may be selected to migrate data. Depending on the implementation details, having a relatively low throughput may indicate that a host 703 is using a saturated memory device 705 at a relatively low or lowest intensity, and thus, may cause the least disruption to system and/or application performance by migrating some or all of its data between memory devices 705.

Therefore, in some embodiments, at operation (b), saturation detector 725 may select a host 703 having a relatively low (e.g., the lowest) throughput, for example, on a per-page basis. In some embodiments, a per-page throughput may be determined for a specific host 703 using the following equation: $PageTP = \left\{\begin{matrix}\frac{TotalTP}{# of AccessedPages} , & if TotalTP > 0 \\ 0 , & otherwise\end{matrix}\right.$ where *PageTP* may represent a total throughput on a per-page basis for a specific host 703, TotalTP may represent a total overall throughput for the specific host 703, and/or #ofAccessedPages may represent a total number of pages accessed by the specific host 703 using the TotalTP.

At operation (c), saturation detector 725 may issue a notification to one or more hosts 703 that may have been selected at operation (b).

For example, at operation (2), in some embodiments, memory device 705-m may send a saturation notification to one or more hosts 703 by triggering an interrupt through a CXL or other protocol as indicated by one or more arrows 728.

In some embodiments, register 726 may include a feature that may enable a specific host 703 to prevent saturation detector 725 from selecting the specific host 703 and/or notifying the specific host 703 of a saturation condition and/or selection as described above. For example, a register 726 may include a bit (e.g., an interrupt enable bit) for one or more (e.g., each) host 703 that may be de-asserted by a specific host 703 to prevent the specific host from being selected and/or notified. An interrupt enable bit or other such feature may be useful, for example, if a specific host 703 determines that one or more (e.g., all) upstream ports are saturated, and thus, migrating data between memory devices 705 attached to the specific host 703 and/or redistributing throughput between downstream ports used by memory devices 705 attached to the specific host 703 may not be improved beyond the current saturated level because. In such a situation, the specific host 703 may de-assert an interrupt enable bit in a register 726 of one or more (e.g., all) memory devices attached to the specific host 703 and/or assert the interrupt enable bit in a register 726 of one or more (e.g., all) memory devices attached to the specific host 703 if and when the saturation condition no longer exists. In such a situation when one or more interrupt enable bits are de-asserted in a register of a memory device 705, the memory device 705 may deprioritize one or more hosts 703 corresponding to the de-asserted bits.

In some embodiments, one or more of hosts 703-1, ... 703-n may include a device performance monitor 721-1, ... 721-n, respectively.

At operation (3), based on receiving a saturation notification from a memory device 705 as indicated by arrows 728, a performance monitor 721 may request and/or receive logical device access count information (e.g., logical device read and/or write counts) from the saturation detector 725 that sent the notification as indicated by one or more arrows 729. For example, host 703-1, based on receiving a saturation notification 728-1 from saturation detector 725 at memory device 705-m may request access counts from register 726 at memory device 705-m which host 703-1 may use to select (e.g., on a throughput-basis) a device to which it may migrate data for purposes of redistributing throughput, and/or which host 703-1 may use to perform a data migration (e.g., an incremental data migration).

In some embodiments, saturation detector 725 may include one or more page access status data structures 740 to track one or more page access statuses (e.g., on a per-LD basis). For example, page access status data structures 740 may be implemented with a first bitmap 740-1 and a second bitmap 740-2 which may toggle (e.g., alternate) between being active and inactive. A bitmap may be implemented with any suitable mapping between elements of the bitmap and memory. For example, in some example embodiments, one or more bits (e.g., each bit) of a bitmap may correspond to a physical page of memory, and thus, each memory device may have a corresponding bitmap that may cover some or all of the pages of the memory device. In some embodiments, one or more logical devices (e.g., each logical device) may check an access status by referencing a portion of the bitmap corresponding to the pages assigned to that logical device.

In a first phase of a bitmap cycle, first bitmap 740-1 (which may be referred to as an active bitmap in the first phase) may be connected to performance monitor 729 through switch 741 to map page access statuses. Also in a first phase, second bitmap 740-2 (which may be referred to as an inactive bitmap in the first phase) may be connected to saturation detector 725 through switch 742 to enable saturation detector 725 to determine accessed pages that may have been mapped in a previous phase.

In a second phase of a bitmap cycle, switches 741 and/or 742 may toggle such that first bitmap 740-1 (which may be referred to as an inactive bitmap in the second phase) may be connected to saturation detector 725 through switch 742 to enable saturation detector 725 to determine accessed pages that may have been mapped by first bitmap 740-1 in the first phase. Also in a second phase, second bitmap 740-2 (which may be referred to as an active bitmap in the second phase) may be connected to performance monitor 729 through switch 741 to map page access statuses. In some embodiments, one or more bits an inactive bitmap may be reset (e.g., cleared) based on toggling.

Depending on the implementation details, the use of two alternating active/inactive bitmaps to map page access statuses (e.g., on a per-LD basis) may enable a host to read a stable and/or unmodified snapshot of access information from an inactive bitmap for a previous epoch, while write activity may be directed to an active bitmap for the current epoch.

In the embodiment illustrated in Fig. 7, memory accesses may be counted at an LD-level (e.g., to determine access frequency), whereas memory accesses may be tracked at a page-level by determining that a page has been accessed at least once (e.g., as indicated by a bit in a bitmap) rather than counting accesses at a page-level. Thus, some or all pages within a given LD may be assumed to share the same request count for that epoch, while a bitmap may provide a per-page access indication without maintaining individual counters. Depending on the implementation details, this may enable throughput to be redistributed (e.g., rebalanced) across memory devices as data is migrated incrementally, based on the monitored LD-level access characteristics. Moreover, depending on the implementation details, this may reduce overhead that may incurred by counting page-level access frequencies. In other embodiments, however, page-level access frequency may be tracked by counting individual page accesses.

Fig. 8 illustrates an embodiment of a method and apparatus for selecting a target memory device for data migration and/or throughput redistribution in accordance with example embodiments of the disclosure. The embodiment illustrated in Fig. 8 may be implemented with, or be used to implement, any of the memory devices, memory systems, and/or operations and/or methods disclosed herein. For example, the embodiment illustrated in Fig. 8 may be used by a host that may have been selected using the method illustrated and described with respect to Fig. 7 to select memory device to which throughput may be redistributed and/or data may be migrated.

Referring to Fig. 8, memory system may include one or more elements that may, in some aspects, be similar to the embodiments illustrated in other figures in which similar elements may be indicated by reference numbers ending in, and/or containing, the same digits, letters, and/or the like. For example, the memory system may include one or more hosts 803-1, ... 803-n, one or more switches 804, and/or one or more memory devices 805-1, ... 805-m.

For purposes of illustration, in the embodiment illustrated in Fig. 8, one or more of switches 804 memory devices 805, communication links, and/or the like, may be described and implemented with CXL components, interconnects, interfaces, protocols, and/or the like. For example, one or more of memory devices 805 may be implemented with CMMs. In other embodiments, however, other memory access components, interconnects, interfaces, protocols, and/or the like, may be used.

The memory system illustrated in Fig. 8 may also include one or more fabric managers (FMs) 830 that may provide information to enable one or more hosts 803 to select one or more suitable memory devices 805 for data migration and/or throughput redistribution. Additionally, or alternatively, one or more fabric managers 830 may assign one or more memory devices 805, logical devices therein, and/or the like, for example, if a host 803 determines that a suitable memory device 805 is not already attached to the host 803. Additionally, or alternatively, one or more fabric managers 830 may select one or more suitable memory devices 805 (e.g., at the request of a host 803) for data migration and/or throughput redistribution.

Fabric manager 830 may be implemented, for example, with software and/or firmware running on, and/or embedded in, one or more hosts 803, switches 804, a controller (e.g., a baseboard management controller BMC), a dedicated device, and/or the like.

One or more (e.g., each) of memory devices 805 may include one or more logical devices 831. Some logical devices 831 may be controlled by fabric manager 830 and thus may be designated as FM-owned. In some embodiments, a fabric manager 830 may request and/or receive information such as throughput information (e.g., on per-device basis, a per-LD basis, and/or the like) from one or more memory devices 805. For example, an FM-owned logical device such as 831-1-1 at memory device 805-1 may aggregate throughput information (e.g., read and/or write request counts from one or more other logical devices LD0-LD15 at memory device 805-1. A fabric manager 830 may request and/or receive such throughput information from one or more memory devices 803 as illustrated by arrows 892, for example, using a CCI to issue commands which may be carried, for example, in-band (e.g., using Memory Mapped Input/Output (MMIO)) and/or out-of-band (e.g., using MCTP which may support out-of-band communication including System Management Bus (SMBus), I2C, PCle, Universal Serial Bus (USB), other types of serial links, and/or the like). A fabric manager 830 may store throughput information, for example, in a data structure such as table 843 which may an entry for one or more (e.g., each) memory device 805 in memory system 802. An entry may include, for example, a device identifier (Device ID), a device capacity utilization, and/or a current device throughput.

Fabric manager 830 may perform any number of the following functions: managing the statuses (e.g., assigned, available, unbound, and/or the like) of logical devices 831; maintaining information on saturation statuses of memory devices 805; assigning one or more logical devices 831 from one or more memory devices 805 that are not saturated; and/or the like.

At operation (1), host 803-n may receive a notification (e.g., using an interrupt) from memory device 805-2 informing host 803-n that memory device 805-2 is saturated and that host 803-n has been selected to migrate some or all of its data from memory device 805-2 and/or redistribute some or all of the throughput of memory device 805-2 to another memory device.

At operation (2), host 803-n may request throughput information about one or more memory devices 805 (e.g., non-saturated memory devices 805) from fabric manager 803 (e.g., from table 843).

Also at operation (2), using throughput information received from fabric manager 803 and/or logical device access count information (e.g., logical device read and/or write counts) received from one or more memory devices 805 (e.g., as described above with respect to operation (3) in Fig. 7), host 803-n may determine if one or more suitable target memory devices 805 may be attached to host 803-n.

Examples of criteria that host 803-n may use to determine the presence of a suitable target memory device 805 may include that the target device may have sufficient available bandwidth to accommodate the redistributed throughput associated with migrating pages (e.g., for effective redistribution and/or balancing of throughput between saturated memory device 805-2 and the target memory device 805. For example, host 805-n may invoke a procedure called alloc_dev(min_size, TP) which may return an identifier of one or more suitable memory devices 805 in which parameter min_size may indicate a minimum available memory capacity of a suitable memory device 805 and/or parameter TP may indicate a minimum available throughput of a suitable memory device 805. Parameter min_size may be determined, for example, using the following equation: $min_ size = \frac{number _ of _ accessed _ pages}{2}$ where *number_of_accessed_pages* may indicate a total number of pages accessed at saturated memory device 805-2 (e.g., using register 726, saturation detector 725, and/or page access bitmaps 740 as illustrated in Fig. 7) to detect saturation.

Parameter TP may be determined, for example, using the following equation: $TP = \frac{TotalTP _ of _ LDs}{2}$ where *TotalTP_of_LDs* may indicate a total throughput of logical devices at saturated memory device 805-2 (e.g., using register 726, saturation detector 725, and/or page access bitmaps 740 as illustrated in Fig. 7) to detect saturation.

At operation (3), fabric manager 830 may assign one or more suitable memory devices identified at operation (2) (e.g., a best-fit memory device 805 based on one or more requirements of parameters min_size and/or TP) to host 803-n. For example, fabric manager 830 may send a request to a suitable memory device 805 to attach to host 803-n, for example, by sending a CCI command using a mailbox technique and/or using MCTP.

If, at operation (3), host 803-n and/or fabric manager 830 determine that a suitable memory device is not attached to host 803-n, host 803-n may request that fabric manager 830 assign and/or or attach another memory device 805 and/or logical device located therein, to host 803-n.

Fig. 9 illustrates an embodiment of a method and apparatus that may incrementally migrate data, and/or incrementally redistribute throughput, from a first logical device to a second logical device in accordance with example embodiments of the disclosure. The embodiment illustrated in Fig. 9 may be implemented with, or be used to implement, any of the memory devices, memory systems, and/or operations and/or methods disclosed herein. For example, the embodiment illustrated in Fig. 9 may be used to migrate data, and/or redistribute throughput, between memory devices illustrated in Fig. 3, Fig. 6, and/or any other drawings herein. The embodiment illustrated in Fig. 9 may include one or more elements that may, in some aspects, be similar to the embodiments illustrated in other figures in which similar elements may be indicated by reference numbers ending in, and/or containing, the same digits, letters, and/or the like.

Referring to Fig. 9, a host 903 may be connected to logical devices 931-1 and/or 931-2 by ports 944-1 and/or 944-2, respectively. Port 944-1 may be implemented with an upstream port and/or a downstream port. Port 944-2 may be implemented with an upstream port and/or a downstream port. Logical devices 931-1 and 931-2 may be located at the same or different memory devices.

Logical device 931-1 may be located at a memory device that may be saturated, and logical device 931-2 may be located at a non-saturated memory device. For purposes of illustration, logical device 931-1 may be referred to as, and/or described as being, saturated, and logical device 931-1 may be referred to as, and/or described as being, non-saturated, newly allocated, new, and/or the like. Thus, port 944-1 may initially be referred to as, and/or described as being, saturated. For example, the throughput of port 944-1 may initially be 100 percent of its maximum bandwidth (e.g., 16GB/s of a 16GB/s port). Port 944-2 may initially have zero throughput.

As explained in more detail below, the method illustrated in Fig. 9 may incrementally migrate relatively small batches of data from logical device 931-1 to logical 931-2 and monitor the affect of migrating one or more (e.g., each) batch on the throughputs of ports 944-1 and/or 944-2 until the throughputs of ports 944-1 and/or 944-2 reach one or more target values, at which point the method may stop or pause migrating data. In some embodiments, and depending on the implementation details, this may be characterized, and/or referred to, as light-weight dynamic throughput balancing and/or adaptive incremental migration because, for example, it may use iterative feedback to reduce or minimize the amount of data that may be migrated to achieve a specified redistribution of throughput.

To implement the method illustrated in Fig. 9, host 903 may calculate an amount of throughput to redistribute. For example, upon receiving a notice of saturation (e.g., through an interrupt) from a memory device, host 903 may retrieve a total request count (e.g., a total count of read and/or write requests) and/or a page access status of logical device 931-1, for example, from a saturation detector, performance monitor, and/or the like, at a memory device at which logical device 931-1 may be located. Host 903 may use the total request count and/or page access status to calculate an amount of throughput to redistribute and/or a number of pages to migrate from logical device 931-1 to logical device 931-2.

The calculations may be based, at least in part, on one or more parameters that may be provided by a user. For example, a user may provide (e.g., define) a percentage of throughput to be redistributed and/or a percentage of accessed pages (e.g., relatively hot pages that may be accessed relatively frequently) to migrate. In some embodiments, one or more accessed pages may have different access frequencies. In some embodiments, a user may also provide a percentage of pages to be migrated per patch.

For purposes of illustration, some example values are provided below, but the aspects of the disclosure are not limited to these or any other values.

In one example embodiment, logical device 931-1 may initially be saturated at 16BGB/s through port 944-1 and have a total of 120K accessed pages. Logical device 931-2 may initially have zero throughput through port 944-1 and have zero pages. Host 903 may be configured with a target throughput redistribution of 25 percent and a target page migration of 20 percent. Host 903 may also be configured to incrementally migrate 10 percent of the target number of pages per batch. Thus, host 903 may determine that a throughput of 16GB/s * 0.25 = 4GB/s should be redistributed from logical device 931-1 to logical device 931-2 leaving 12GB/s of throughput at logical device 931-1. Host 903 may also determine that 120K * 0.20 *0.1 = 2K pages should be migrated per batch.

Host 903 may migrate a first batch of 2K pages from logical device 931-1 to logical device 931-2 as shown by arrow 990. Host 903 may monitor changes in the per-LD throughput after migrating the first batch of 2K pages. If the throughput of logical device 931-2 has reached the target of 4GB/s, host 903 may stop migrating pages. If, however, the throughput of logical device 931-2 has not reached the 4GB/s target, host 903 may continue migrating data in batches of 2K pages and monitor the change in throughput of logical device 931-1 and/or logical device 931-2 after one or more (e.g., each) batch of data is migrated until the throughput of logical device 931-2 reaches the 4GB/s target (and/or the throughput of logical device 931-1 reached the 12GB/s target). Host 903 may then stop migrating data.

Figs. 10A through 10F illustrate an embodiment of a method and apparatus that may incrementally migrate data, and/or incrementally redistribute throughput, from a first memory device to a second memory device in accordance with example embodiments of the disclosure. The embodiment illustrated in Fig. 10 may be implemented with, or be used to implement, any of the memory devices, memory systems, and/or operations and/or methods disclosed herein. For example, the embodiment illustrated in Fig. 10 may be used to implement the embodiment illustrated Fig. 9 in which the first and second logical devices may be located in separate memory devices.

The embodiment illustrated in Fig. 10 may include one or more elements that may, in some aspects, be similar to the embodiments illustrated in other figures in which similar elements may be indicated by reference numbers ending in, and/or containing, the same digits, letters, and/or the like. For example, system 1002 may include one or more hosts 1003, one or more switches 1004, and/or one or more memory devices 1005.

Host 1003-1 may be connected to memory device 1005-1 through a first upstream port 1007-1, a first virtual switch 1006-1 in switch 1004, and/or a first downstream port 1008-1. Host 1003-1 may also be connected to memory device 1005-1 through a second upstream port 1007-2, a second virtual switch 1006-2 in switch 1004, and/or the first downstream port 1008-1.

Memory device 1005-1 may be configured with or more logical devices (in this example, sixteen logical devices) indicated as LD0, LD2, ... LD15. Memory device 1005-1 may include a sharable memory region 1045 that may include one or more portions that may be mapped to, and/or accessed as, logical device LD0 using a DCD extent list 1046-0 and/or may be mapped to, and/or accessed as, logical device LD1 using a DCD extent list 1046-1.

Referring to Fig. 10A, initially, a portion of shared memory associated with virtual address region 1047 in host 1003-1 may be mapped to physical address region 1048-1 and accessed in logical device LD0 in memory device 1005-1 through upstream port 1007-1 (as indicated by arrow 1057-1-1), virtual switch 1006-1, and downstream port 1008-1 (as indicated by path 1058-1-1).

Referring to Fig. 10B, host 1003-1 may be notified (e.g., by memory device 1005-1) that memory device 1005-1 is saturated. Therefore, host 1003-1 may begin a process to migrate data from memory device 1005-1 to memory device 1005-m, beginning with a virtual migration from logical device LD0 to LD1 within memory device 1005-1.

To perform a virtual migration, host 1003-1 may select one or more target pages for migration in a subregion 1047A of virtual address region 1047. In some embodiments, this may be referred to, and/or characterized as, a migration target page selection phase. Host 1003-1 may incrementally remap the selected target pages in subregion 1047A to physical address region 1048-2 which may be mapped to logical device LD1 in memory device 1005-1 and accessed using upstream port 1007-2 (as indicated by arrow 1057-2-1), virtual switch 1006-2, and/or downstream port 1008-1 (as indicated by path 1058-2-1). As data in subregion 1047A is incrementally migrated from logical device LD0 to logical device LD1, throughput on upstream port 1007-1 may be incrementally redistributed to upstream port 1007-2. Thus, while the physical location of virtually migrated pages of data may remain unchanged in memory device 1005-1, the data access path may shift from upstream port 1007-1, virtual switch 1006-1, and/or logical device LD0 to upstream port 1007-2, virtual switch 1006-2, and/or logical device LD1.

Referring to Fig. 10C, host 1003-1 may monitor, on a per-LD basis, changes in throughput on upstream ports 1007-1 and 1007-2 as shown by arrow 1049. Thus, host 1003-1 can determine when enough target pages have been migrated from logical device LD0 to logical device LD1 in memory device 1005-1 to achieve a target redistribution of throughput from upstream port 1007-1 to upstream port 1007-2. An incremental migration may be performed, for example, in a manner similar to the method illustrated and described with respect to Fig. 9.

Referring to Fig. 10D, based on a successful virtual migration process, new logical devices LD0 and/or LD1 in memory device 1005-m may be allocated to host 1003-1. In some embodiments, memory device 1005-m may be selected by host 1003-1 and/or a fabric manager, for example, as illustrated and described above with respect to Fig. 8.

Logical devices LD0 and/or LD1 in memory device 1005-m may be mapped to sharable memory regions logical device 1005-m in a manner similar to memory device 1005-1. Logical device LD0 in memory device 1005-m may be mapped to physical address region 1048-3 and accessed through upstream port 1007-1 (as indicated by arrow 1057-1-2), virtual switch 1006-1, and/or downstream port 1008-2 (as indicated by path 1058-2-2). Logical device LD1 in memory device 1005-m may be mapped to physical address region 1048-4 and accessed through upstream port 1007-2 (as indicated by arrow 1057-2-2), virtual switch 1006-2, and/or downstream port 1008-2 (as indicated by path 1058-2-2). In some embodiments, this may be referred to, and/or characterized as, a device allocation phase.

Referring to Fig. 10E, host 1003-1 may migrate (e.g., copy) actual data mapped to logical device LD1 in memory device 1005-1 to a region of shared memory mapped to logical device LD1 in memory device 1005-m as shown by arrow 1050. Actual data may be migrated to logical device LD1 in memory device 1005-m, for example, using path 1058-2-2, while the actual data may still be accessed in logical device LD1 in memory device 1005-1 through physical address region 1048-2 using path 1058-2-2. The amount of actual data migrated may be determined, for example, based on the amount of incremental data migration from logical device LD0 to logical device LD1 in memory device 1005-1 required to achieve the specified redistribution of throughput from upstream port 1007-1 to upstream port 1007-2 as described above with respect to Fig. 10C.

Referring to Fig. 10F, based on a successful migration of actual data, host 1003-1 may remap one or more pages in virtual address region 1047A to physical address region 1048-4. Data mapped to the remaining portion 1047B of original region 1047 may remain mapped to logical device LD0 in memory device 1005-1. Thus, actual data previously physically located in memory device 1005-1 may be accessed in memory device 1005-m in a manner that may redistribute at least a portion of throughput from upstream port 1007-1 to upstream port 1007-2 and/or from downstream port 1008-1 to downstream port 1008-2. Depending on the implementation details, this may improve the overall memory access performance of memory system 1002 because, for example, an amount of data previously located at a single memory device 1005-1 and accessible through a single upstream port 1007-1 and/or a single downstream port 1008-1 may be accessed at two memory devices 1005-1 and 1005-m through two upstream ports 1007-1 and 1007-2 and/or two downstream ports 1008-1 and 1008-2.

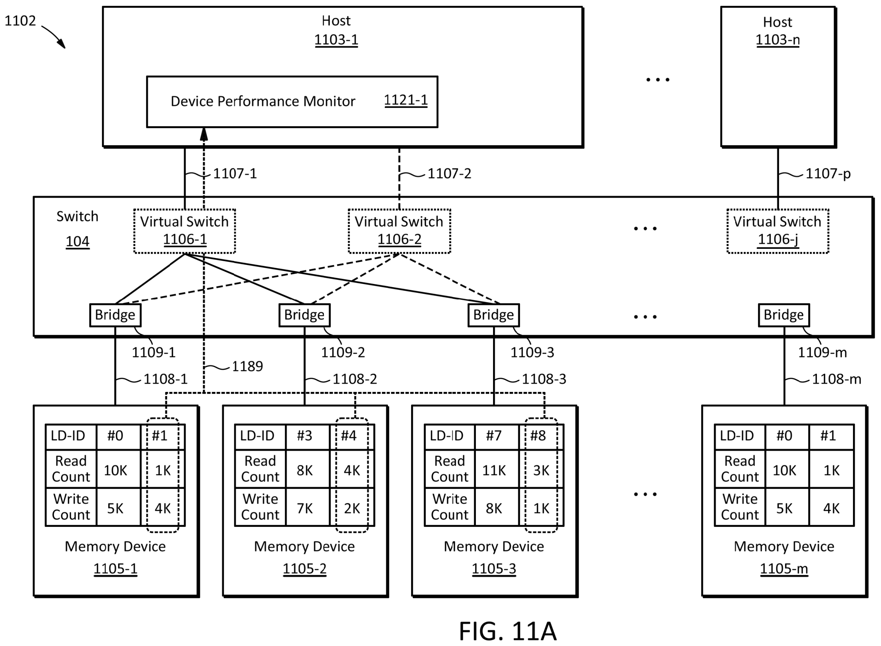

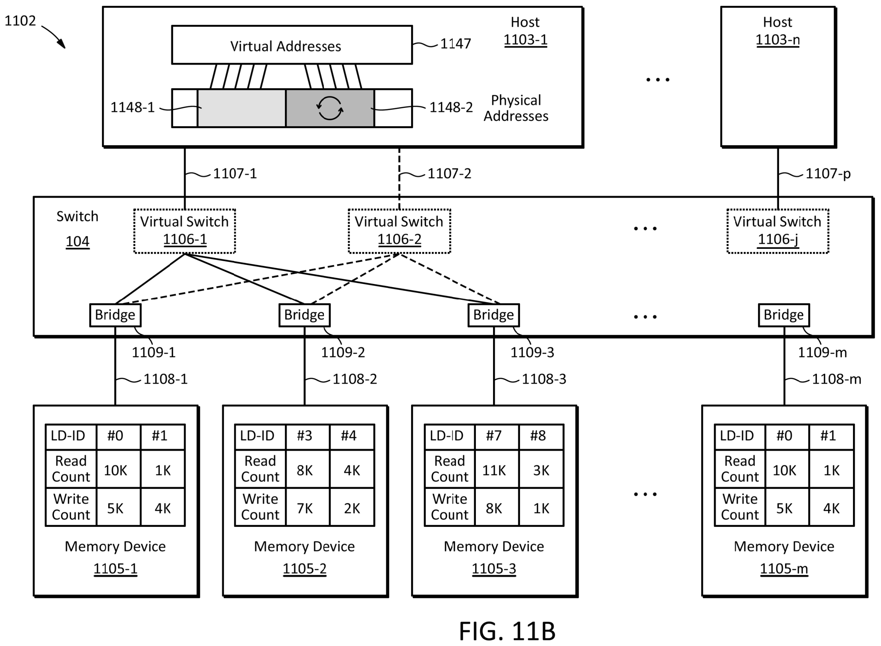

Fig. 11A illustrates an embodiment of a memory system having a host with two upstream ports in accordance with example embodiments of the disclosure. Fig. 11B illustrates the embodiment of the memory system illustrated in Fig. 11A in which throughput is redistributed from a first upstream port to a second upstream port based on a saturation of the first upstream port in accordance with example embodiments of the disclosure.

The embodiment illustrated in Fig. 11 may be implemented with, or be used to implement, any of the memory devices, memory systems, and/or operations and/or methods disclosed herein including, for example, the embodiment illustrated and described with respect to Fig. 2. In the embodiment illustrated in Fig. 11, memory system 1102 may include one or more elements that may, in some aspects, be similar to the embodiments illustrated in other figures in which similar elements may be indicated by reference numbers ending in, and/or containing, the same digits, letters, and/or the like. For example, memory system 1102 may include one or more hosts 1103, one or more upstream ports 1107, one or more switches 1104 having one or more virtual switches 1106 and/or one or more bridges 1109, one or more downstream ports 1108, and/or one or more memory devices 1105.

Referring to Fig. 11A, one or more of memory devices 1105 may include a data structure such as a register 1126 that may track counts of accumulated read requests and/or write requests for one or more logical devices in one or more (e.g., each) of memory devices 1105. In some embodiments, a register 1126 may operate in a manner similar to count register 726 illustrated and described with respect to Fig. 7.

For purposes of illustration, in the example illustrated in Fig. 11, host 1103-1 may use upstream port 1107-1 and virtual switch 1106-1 to access memory devices 1105-1, 1105-2, and/or 1105-3 through bridges 1109-1, 1109-2, and/or 1109-3, respectively. Host 1103-1 may also use upstream port 1107-2 and virtual switch 1106-2 to access memory devices 1105-1, 1105-2, and/or 1105-3 through bridges 1109-1, 1109-2, and/or 1109-3, respectively. Thus, host 1103-1 may access data in the same physical locations in one or memory devices using separate data access paths.

In some embodiments, to detect a saturation condition of one or more upstream ports 1107-1 and/or 1107-2, host 1103-1 request and/or retrieve throughput information from one or more (e.g., each) logical device allocated to host 1103-1 as shown by arrow 1189. Host 1103-1 may request and/or retrieve throughput information periodically, for example at a default interval of one second and/or at any other interval which, in some embodiments, may be determined by a user.

Host 1103-1 may detect a saturation condition of one or more upstream ports 1107-1 and/or 1107-2, for example, by summing throughput information from one or more (e.g., each) logical device allocated to host 1103-1. In some embodiments, host 1103-1 may use the following equation to determine an overall throughput for an upstream port: ${USP}^{TP} = \sum {LD}^{TP}$ where *USP^{TP}* may indicate a total overall throughput for the upstream port, *LD^{TP}* may indicate a throughput for an individual downstream port accessed by host 1103-1 using the individual downstream port, and Eq. 4 sums the individual throughputs for each downstream port accessed by host 1103-1 using the upstream port. A detection of a saturation condition on an upstream port 1107 and/or a calculation according to Eq. 4 may be performed, for example, by a device performance monitor 1121-1 located at host 1103-1.

Referring to Fig 11B, based on detecting a saturation condition of an upstream port 1107, which in this example may be assumed to be upstream port 1107-1, host 1103-1 may redistribute throughput from upstream port 1107-1 (e.g., a port with a relatively higher throughput) to upstream port 1107-2 (e.g., a port with a relatively lower throughput) which, depending on the implementation details, may be referred to, and/or characterized as, balancing throughput between the ports. In some embodiments, host 1103-1 may implement an incremental throughput redistribution method that may be similar in some aspects to an incremental data migration as illustrated and described with respect to Fig. 9, Fig. 10, and/or other drawings.

To perform an incremental throughput redistribution, host 1103-1 may select target data in one or more pages, logical devices, and/or other units of memory in a region of virtual addresses 1147 currently mapped to a first region 1148-1 of physical addresses that may be accessed using first upstream port 1107-1. Host 1103-1 may incrementally remap relatively small batches of the target data to a second region 1148-1 of physical addresses that may be accessed using second upstream port 1107-2.

Host 1103-1 may monitor changes in throughput on upstream ports 1107-1 and 1107-2, for example, base on one or more (e.g., each) remapping of batches of target data. Thus, host 1103-1 may be able to determine when enough target pages have been migrated from region 1148-1 of physical addresses to region 1148-2 of physical addresses to achieve a target redistribution of throughput from upstream port 1107-1 to upstream port 1107-2.

In some embodiments, and depending on the implementation details, a throughput redistribution technique as illustrated and described with respect Fig. 11 may enable host 1103-1 to redistribute (e.g., balance) throughput between two or more upstream ports with little or no data migration.

In some embodiments, and depending on the implementation details, one or more aspects of the disclosure may provide any number of the following advantages, features, and/or the like. In some embodiments, one or more memory devices (e.g., CMMs) may monitor access frequency per logical device to detect if the device's throughput has reached saturation. Access data may be recorded per epoch, with pages accessed within each epoch marked using a bitmap. If device throughput becomes saturated, a notification (e.g., an interrupt) may be sent to the host utilizing the device least intensively which may enable the relocation of pages used by that host to another device. Host priority may also be considered in this process. The notified (e.g., interrupted) host may select one or more pages for migration based, for example, on two or more UPSs with memory sharing and/or migrating the pages. In some embodiments, the physical location of the pages may remain unchanged, whereas the access path may shift from the previous USP to another USP. If this redistribution successfully disperses an adequate amount of throughput, the pages transferred within the USP may be subsequently migrated to a non-saturated device. In cases where the device itself may not be saturated but instead a single USP may saturated, the process is carried out only up to the stage before physical migration of pages, thereby achieving throughput expansion without physical migration.

In some embodiments, and depending on the implementation details, one or more aspects of the disclosure may provide any number of the following advantages, features, and/or the like. Some embodiments may extend throughput dynamically via throughput balancing. Some embodiments may implement a dual-bitmap-based page access status check on a per-epoch basis. Some embodiments may rotate active and inactive bitmaps to prevent reader-writer interference. Some embodiments may mitigate application performance degradation from page migration through a lowest-throughput host selection policy. Some embodiments may implement throughput aware device allocation. Some embodiments may implement light-weight migration candidate page selection, for example, using overall throughput change-based light-weight dynamic throughput scaling. Some embodiments may implement throughput balancing without page migration in cases of USP saturation.

In some embodiments, and depending on the implementation details, one or more aspects of the disclosure may provide any number of the following advantages, features, and/or the like. Some embodiments may extend throughput dynamically via throughput balancing. Some embodiments may implement dual-bitmap-based page access status checks on a per-epoch basis. Some embodiments may rotate active and inactive bitmaps to prevent reader-writer interference. Some embodiments may mitigate application performance degradation from page migration through a lowest-throughput host selection policy. Some embodiments may implement throughput aware device allocation, for example, using a light-weight migration candidate page selection technique. Some embodiments may implement overall throughput change-based light-weight dynamic throughput scaling.

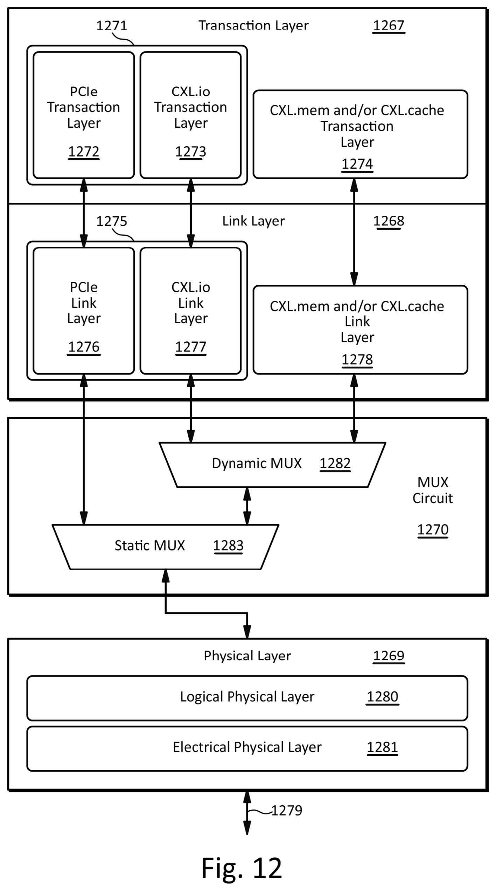

Fig. 12 illustrates an embodiment of a memory access protocol stack in accordance with example embodiments of the disclosure. The protocol stack illustrated in Fig. 12 may be used, for example, to implement any of the communication links, interfaces, and/or the like disclosed herein. The protocol stack illustrated in Fig. 12 may include a transaction layer 1267, a link layer 1268, a physical layer 1269, and/or an arbitration and/or multiplexing and/or demultiplexing circuit 1270 (which may also be referred to as a multiplexer, a MUX, an ARB/MUX circuit, a MUX circuit, and/or the like).

The transaction layer 1267 may include a first portion 1271 (which may be referred to as a PCIe/CXL transaction layer) that may include logic to implement a PCIe transaction layer 1272 and/or a CXL.io transaction layer 1273. In some embodiments, some or all of the CXL.io transaction layer 1273 may be implemented as an extension, enhancement, and/or the like, of some or all of the PCIe transaction layer 1272. Although shown as separate components, in some embodiments, a PCIe transaction layer 1272 and CXL.io transaction layer 1273 may be converged into one component. The transaction layer 1267 may include a second portion 1274 (which may be referred to as a CXL.mem/CXL.cache transaction layer, a CXL.cachemem transaction layer, and/or the like) that may include logic to implement a CXL.mem and/or CXL.cache transaction layer.

The transaction layer 1267 may implement transaction types, transaction layer packet formatting, transaction ordering rules, and/or the like. In some embodiments, the CXL.io transaction layer 1273 may be similar, for example, to a PCIe transaction layer 1272. For CXL.mem, the CXL.mem/CXL.cache transaction layer 1274 may implement message classes (e.g., in each direction), one or more fields associated with message classes, message class ordering rules, and/or the like. For CXL.cache, the CXL.mem/CXL.cache transaction layer 1274 may implement one or more channels (e.g., in each direction) such as channels for request, response, data, and/or the like, transaction opcodes that may flow through a channel, channel ordering rules, and/or the like.

The link layer 1268 may include a first portion 1275 (which may be referred to as a PCIe/CXL link layer) that may include logic to implement a PCIe link layer 1276 (which may also be referred to as a data link layer) and/or a CXL.io link layer 1277. In some embodiments, some or all of the CXL.io link layer 1277 may be implemented as an extension, enhancement, and/or the like, of some or all of the PCIe link layer 1276. Although shown as separate components, in some embodiments, a PCIe link layer 1276 and CXL.io link layer 1277 may be converged into one component. The link layer 1268 may include a second portion 1278 (which may be referred to as a CXL.mem/CXL.cache link layer, a CXL.cachemem link layer, and/or the like) that may include logic to implement a CXL.mem and/or CXL.cache link layer.

The link layer 1268 may implement transmission of transaction layer packets across a physical link 1279 (e.g., one or more physical lanes). In some embodiments, the link layer 1268 may implement one or more reliability mechanisms such as a retry mechanism, cyclical redundancy check (CRC) code calculation and/or checking, control flits, and/or the like. In some embodiments, the CXL.io link layer 1277 may be similar, for example, to a PCIe link layer 1276. For CXL.mem and/or CXL.cache, the CXL.mem/CXL.cache link layer 1278 may implement one or more flit formats, flit packing rules (e.g., for selecting transactions from internal flit queues to fill slots), and/or the like.

The physical layer 1269 (which may also be referred to as a PHY or Phy layer) may implement, operate, train, and/or the like, a physical link 1279, for example, to transmit PCIe packets, CXL flits, and/or the like. The physical layer 1269 may include a logical physical layer 1280 (which may also be referred to as a logical PHY, logPHY, or a LogPhy layer) and/or an electrical physical layer 1281 (which may also be referred to as an analog physical layer). In some embodiments, on a transmitting side of a link, the logical physical layer 1280 may prepare data from a link layer for transmission across a physical link 1279. On a receiving side of a link, the logical physical layer 1280 may convert data received from the link to an appropriate format to pass on to the appropriate link layer. In some embodiments, the logical physical layer 1280 may perform framing of flits and/or physical layer packet layout for one or more flit modes.

The electrical physical layer 1281 may include one or more transmitters, receivers, and/or the like to implement one or more lanes. A transmitter may include one or more components such as one or more drivers to drive electrical signals on a channel, a deskew circuit, clock circuitry, and/or the like. A receiver may include one or more components such as one or more amplifiers and/or sampling circuits to receive data signals, clock signals, and/or the like), a deskew circuit, clock circuitry (e.g., a clock recovery circuit), and/or the like.

In some embodiments, the logical physical layer 1280 may be implemented at least partially as a converged logical physical layer that may operate in a PCIe mode, a CXL mode, and/or the like, depending, for example, on an operating mode of the transaction layer 1267 and/or the link layer 1268.

The MUX circuit 1270 may be configured to perform one or more types of arbitration, multiplexing, and/or demultiplexing (which may be referred to individually and/or collectively as multiplexing) of one or more protocols to transfer data over a physical link 1279. In some embodiments, the MUX circuit 1270 may include a dynamic multiplexing circuit 1282 that may dynamically multiplex transfers using one or more of the CXL.io, CXL.mem, and/or CXL.cache protocols onto the physical link 1279. For example, after the physical link 1279 has been configured, trained, and/or the like, the dynamic multiplexing circuit 1282 may interleave transactions using one or more of the CXL.io, CXL.mem, and/or CXL.cache protocols onto the physical link 1279, depending on the implementation details, without reconfiguring, retraining, and/or the like, the physical link 1279.

In some embodiments, the MUX circuit 1270 may include a static multiplexing circuit 1283 that may statically multiplex transactions using one or more of the CXL protocols (e.g., CXL.io, CXL.mem, and/or CXL.cache) with transactions using a PCIe protocol onto the physical link 1279. For example, in some embodiments, the physical link 1279 may be reconfigured, retrained, and/or the like, between transactions using a CXL protocol and transactions using a PCIe protocol.

The protocol stack illustrated in Fig. 12, or one or more portions thereof, may be used, for example, to implement any of the CXL techniques described in this disclosure. In some embodiments, one or more portions of the protocol stack illustrated in Fig. 12 may be omitted, and/or one or more additional portions may be included. For example, some embodiments may omit the PCIe transaction layer 1272 and/or the PCIe link layer 1276.

For purposes of illustration, some example embodiments may describe certain operations being performed by, and/or certain functionality being located at, specific components, but in other embodiments, such operations and/or functionality may be performed by, located at and/or the like, other components. For example, in the example embodiments illustrated and described with respect to Fig. 7 and/or Fig. 10, host 703-1 and/or 1003-1 may be selected at memory device 705-m, and host 1003-1 may control data migration from memory device 1005-1 to 1005-m, but in other embodiments, any operations, functionality, and/or the like, for selection, migration, control, attachment, assignment, and/or the like, may be implemented at any other components such as one or more switches, fabric managers, hosts, memory devices, and/or the like.

Any of the functionality described herein, including any of the host functionality, memory device functionally, one or more control circuits (e.g., one or more control circuits 417, performance monitors 721, 722, 729, 1121, and/or the like, saturation detectors 725, and/or the like), fabric manager functionality (e.g., fabric manager 830), and/or the like, may be implemented with hardware, software, firmware, or any combination thereof including, for example, hardware and/or software combinational logic, sequential logic, timers, counters, registers, state machines, volatile memories such DRAM and/or static random access memory (SRAM), nonvolatile memory including flash memory, persistent memory such as cross-gridded nonvolatile memory, memory with bulk resistance change, PCM, and/or the like and/or any combination thereof, complex programmable logic devices (CPLDs), field programable gate arrays (FPGAs), application specific integrated circuits (ASICs), CPUs including CISC processors such as x86 processors and/or RISC processors such as ARM processors, GPUs, NPUs, TPUs, and/or the like, executing instructions stored in any type of memory. In some embodiments, one or more components may be implemented as a system-on-chip (SOC), a multi-chip module, one or more chiplets (e.g., integrated circuit (IC) dies) in a package, and/or the like.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific components, processes, operations, etc., but these terms also encompass embodiments in which a specific components, process, operation, etc. may be implemented with multiple components, processes, operations, etc., or in which multiple components, processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

## Claims

1. A method comprising:
accessing, by at least one host, using a first memory access link between a switch and a first memory device, data at the first memory device; and
transferring, based on a throughput of the first memory device, using a second memory access link between the switch and a second memory device, a portion of the data from the first memory device to the second memory device.

2. The method of claim 1, further comprising accessing, by the at least one host, using the second memory access link, the portion of the data at the second memory device.

3. The method of claim 1 or 2, further comprising selecting, based on the throughput of the first memory device, one of the at least one host to perform the transferring.

4. The method of any one of claims 1 to 3, further comprising:
performing a first determination, using a first data structure, of a memory access status of one or more first memory accesses of the first memory device;
changing, based on the first determination, an active state of the first data structure;
performing a second determination, based on the active state of the first data structure, using a second data structure, of a memory access status of one or more second memory accesses of the first memory device; and
selecting, based on the active state of the first data structure, using the second data structure, one of the at least one host to perform the transferring.

5. The method of any one of claims 1 to 4, wherein:
the throughput of the first memory device is a first throughput;
a first one of the at least one host has a second throughput with the first memory device;
a second one of the at least one host has a third throughput with the first memory device; and
the method further comprises selecting, based on the second throughput and the third throughput, the first one of the at least one host to perform the transferring.

6. The method of claim 5, wherein the second throughput is less than the third throughput.

7. The method of any one of claims 1 to 5, further comprising selecting, based on the throughput of the first memory device and a throughput of the second memory device, the second memory device to perform the transferring.

8. The method of any one of claims 1 to 5, further comprising attaching, based on the throughput of the first memory device and a throughput of the second memory device, using a third memory access link, a third memory device to the switch.

9. The method of any one of claims 1 to 5, wherein the transferring comprises:
performing a first transfer of a first part of the portion of the data from the first memory device to the second memory device;
performing, based on the first transfer, a determination of a throughput of the second memory device; and
performing, based on the determination, a second transfer of a second part of the portion of the data from the first memory device to the second memory device.

10. A method comprising:
accessing, by a host, using a first one of two memory access links, data in at least one memory device, wherein the host is connected to the at least one memory device by a switch and the two memory access links; and
accessing, by the host, using a second one of the two memory access links, based on a throughput of the first one of the two memory access links, at least a portion of the data.

11. The method of claim 10, wherein:
the first one of the two memory access links is connected to the switch and a first one of the at least one memory device; and
the second one of the two memory access links is connected to the switch and a second one of the at least one memory device.

12. The method of claim 11, further comprising transferring, based on the throughput of the first one of the two memory access links, the at least a portion of the data from the first one of the at least one memory device to the second one of the at least one memory device.

13. The method of claim 10, wherein:
the first one of the two memory access links is connected to the host and the switch; and
the second one of the two memory access links is connected to the host and the switch.

14. The method of claim 13, wherein:
the data is located in one of the at least one memory device; and
the at least a portion of the data is located in the one of the at least one memory device.

15. The method of any one of claims 10 to 12, wherein:
the first one of the two memory access links is associated with a first physical address for the at least a portion of the data; and
the second one of the two memory access links is associated with a second physical address for the at least a portion of the data.
